# EUROPEAN PATENT APPLICATION

(11) **EP 4 683 371 A1**
(43) Date of publication of application: **21.01.2026**
(21) Application number: 24784179.4
(22) Date of filing: 29.03.2024
(51) Int. Cl.: H04W 16/22

(54) **METHOD AND APPARATUS FOR ADJUSTING AI/ML MODEL**

(30) Priority: 03.04.2023 CN 202310388666; 14.04.2023 CN 202310410902
(71) Applicant: Huawei Technologies Co., Ltd., Shenzhen, Guangdong 518129 (CN)
(72) Inventor: WANG, Sihai, Shenzhen, Guangdong 518129 (CN); QIN, Cheng, Shenzhen, Guangdong 518129 (CN); YANG, Rui, Shenzhen, Guangdong 518129 (CN)
(74) Representative: Maiwald GmbH
(86) International application number: PCT/CN2024/084694
(87) International publication number: WO 2024/208094

(57) **Abstract**

This application relates to a method for adjusting an AI/ML model and an apparatus. A first device sends first information to a second device, where the first information includes information for requesting to adjust a first AI/ML model and/or capability information of a third device. The second device adjusts the first AI/ML model based on the first information, and sends second information, where the second information is information about an adjusted first AI/ML model. The third device receives the second information, and runs the adjusted first AI/ML model based on the second information. In embodiments of this application, when adjusting the first AI/ML model, the second device can consider an actual case of the device on which the first AI/ML model is deployed, so that an adjustment result can adapt to a software and hardware environment of the third device, to improve adaptation between the AI/ML model and the device on which the AI/ML model is deployed. In this way, execution performance of the AI/ML model can be improved.

## Description

### CROSS-REFERENCE TO RELATED APPLICATIONS

This application claims priorities to Chinese Patent Application No. 202310388666.8, filed with the China National Intellectual Property Administration on April 3, 2023 and entitled "MODEL TRANSFER METHOD AND APPARATUS", and to Chinese Patent Application No. 202310410902.1, filed with the China National Intellectual Property Administration on April 14, 2023 and entitled "METHOD FOR ADJUSTING AI/ML MODEL AND APPARATUS", both of which are incorporated herein by reference in their entireties.

### TECHNICAL FIELD

This application relates to the field of communication technologies, and in particular, to a method for adjusting an AI/ML model and an apparatus.

### BACKGROUND

In the field of wireless communication, introduction of an artificial intelligence (artificial intelligence, AI)/a machine learning (machine learning, ML) technology to improve performance is currently a research topic. In this scenario, a node that generates an AI/ML model and a node on which the AI/ML model is deployed may be different nodes. For example, a user equipment (user equipment, UE) may send channel state information (channel state information, CSI) to a base station by using an AI/ML model, and the AI/ML model deployed on the UE may be generated by a network side node.

After one AI/ML model is generated, the AI/ML model may be adjusted to improve processing efficiency or a processing speed of the AI/ML model. For example, a node that generates the AI/ML model selects an adjustment policy, the node adjusts the AI/ML model according to the adjustment policy, and then sends, to a node on which the AI/ML model is deployed, information obtained after the adjustment, so that the node on which the AI/ML model is deployed runs an adjusted AI/ML model. In this adjustment manner, the adjusted AI/ML model may not adapt to a software and hardware environment of the node on which the AI/ML model is deployed. Consequently, the node on which the AI/ML model is deployed may have low running efficiency for the AI/ML model, or even fails to run the AI/ML model.

### SUMMARY

Embodiments of this application provide a method for adjusting an AI/ML model and an apparatus, to improve adaptation between an AI/ML model and a node on which the AI/ML model is deployed.

According to a first aspect, a first method for adjusting an AI/ML model is provided. The method may be applied to a first communication system, and the first communication system includes a first device, a second device, and a third device. The method includes: The first device sends first information to the second device; the second device receives the first information, where the first information includes information for requesting to adjust a first AI/ML model, and/or the first information includes capability information of the third device; the second device adjusts the first AI/ML model based on the first information; the second device sends second information, where the second information is information about an adjusted first AI/ML model; the third device receives the second information; and the third device runs the adjusted first AI/ML model based on the second information.

In this embodiment of this application, the second device may adjust the AI/ML model. In this case, the first device may send, to the second device, the information for requesting to adjust the AI/ML model and/or the capability information of the third device, and the second device may adjust the first AI/ML model based on the first information. This is equivalent to that when adjusting the first AI/ML model, the second device can consider an actual case of the device on which the first AI/ML model is deployed, so that an adjustment result can adapt to a software and hardware environment of the third device, to improve adaptation between the AI/ML model and the device on which the AI/ML model is deployed. In this way, execution performance of the AI/ML model can be improved.

In an optional implementation, the first device and the third device are a same device, and the first device is a terminal device.

In an optional implementation, the first device and the third device are different devices, the first device is a server or a first terminal device, the third device is a second terminal device, and the first terminal device is different from the second terminal device.

For example, the second device is a device configured to generate (or construct) an AI/ML model, and the third device is a device configured to be deployed with the AI/ML model. The first device and the third device may be a same device; or the first device and the third device may be different devices. For example, the third device is a terminal device, and the first device is a server that manages the terminal device.

In an optional implementation, that the second device sends the second information includes: The second device forwards the second information to the third device via the first device; or the second device sends the second information to the third device. The first device may forward information between the first device and the third device. In this case, the second device only needs to interact with the first device. In particular, when there are a large quantity of third devices, a sending process of the second device can be simplified. Alternatively, the second device may directly interact with the third device, to shorten a transmission path.

In an optional implementation, after the third device runs the adjusted first AI/ML model based on the second information, the method further includes: The third device determines first adjustment information based on a running result of the adjusted first AI/ML model; the third device sends the first adjustment information to the second device; the second device receives the first adjustment information; the second device re-adjusts the first AI/ML model based on the first adjustment information; the second device sends third information, where the third information is information about a re-adjusted first AI/ML model; the third device receives the third information; and the third device runs the re-adjusted first AI/ML model based on the third information. The first AI/ML model may still fail to achieve good running performance after adjustment is performed once. In this case, the first AI/ML model may continue to be adjusted, so that running performance of the AI/ML model can be improved.

In an optional implementation, the first information further includes first indication information, and the first indication information indicates whether to adjust the first AI/ML model. The second device may determine, based on the first indication information, whether to adjust the first AI/ML model. For example, if the first indication information indicates to adjust the first AI/ML model, the second device may further parse the capability information that is of the third device and that is included in the first information and/or the information that is for requesting to adjust the first AI/ML model and that is included in the first information. In this way, a probability that the second device performs an invalid processing process can be reduced.

In an optional implementation, the information for requesting to adjust the first AI/ML model includes one or more of the following: an identifier of a first adjustment range, where the first adjustment range includes one or more of the following: the first AI/ML model, a first network layer, a first AI/ML operator, a first AI/ML substructure, a first convolution kernel group, a first convolution kernel, a first connection, or a first neuron; an identifier of a first adjustment policy; an identifier of an object requested to be adjusted; or a quantity or a proportion of objects requested to be adjusted. Adjustment requested by the first information may be the entire first AI/ML model, or may be a part of objects in the first AI/ML model, for example, an object in the first adjustment range. The first information includes the identifier of the first adjustment range, so that the second device can determine objects on which adjustment is performed. For example, the first information requests to adjust the first network layer. In this case, the first adjustment range may include the first network layer, and the second device can determine, based on the identifier of the first adjustment range, that the first network layer is to be adjusted. The first information may alternatively include the quantity or proportion of objects requested to be adjusted, so that the second device can determine, based on the quantity or proportion of objects requested to be adjusted, information such as computing power required in an adjustment process.

In an optional implementation, the capability information of the third device includes one or more of the following: an identifier of a type of the third device; at least one adjustment policy supported by the third device; execution efficiency of the third device for the at least one adjustment policy; an optimal amount of parallel computing that is supported by the third device; efficiency of running at least one object by the third device, where the at least one object includes one or more of the following: an AI/ML model, a network layer, an AI/ML operator, an AI/ML substructure, a convolution kernel group, a convolution kernel, a connection, or a neuron; or information about a bottleneck existing when the third device runs at least one object, where the at least one object includes one or more of the following: an AI/ML model, a network layer, an AI/ML operator, an AI/ML substructure, a convolution kernel group, a convolution kernel, a connection, or a neuron. For example, a second network layer is understood as a running bottleneck layer of the third device. In addition, the capability information may further indicate another capability of the third device. This is not limited.

In an optional implementation, the at least one adjustment policy includes one or more of the following: structured pruning; unstructured pruning; fusing at least two operators; fusing at least two operator layers; fusing at least two network layers; or quantization. In addition to policies such as pruning, fusion, and quantization, another adjustment policy may be further included. This is not limited.

In an optional implementation, the unstructured pruning includes one or more of the following: performing pruning at a basic unit of a connection or a neuron; performing pruning at a basic unit of a connection vector or a neuron vector; or performing pruning at a basic unit of a convolution kernel.

In an optional implementation, the structured pruning includes one or more of the following: performing pruning at a basic unit of a convolution kernel group; or performing pruning at a basic unit of a network layer or an AI/ML operator.

In an optional implementation, the bottleneck information indicates a computing power bottleneck and/or a memory access bottleneck.

In an optional implementation, the second information includes weight information corresponding to an AI/ML operator that is included in the adjusted first AI/ML model. That the second device adjusts the first AI/ML model includes, for example, adjusting weights of all or a part of AI/ML operators that are included in the first AI/ML model. In this case, the second information may include weight information obtained after adjustment, so that the third device can run the adjusted first AI/ML model.

According to a second aspect, a second method for adjusting an AI/ML model is provided. The method may be performed by a first device, and the first device may be included in a first communication system. The first device is, for example, a server or a terminal device, or may be another type of device. The method includes: sending first information to a second device, where the first information includes information for requesting to adjust a first AI/ML model, and/or the first information includes capability information of a third device, and the second device is configured to adjust the first AI/ML model, and the third device is configured to run the first AI/ML model.

In an optional implementation, the first device and the third device are different devices, the first device is a server or a first terminal device, the third device is a second terminal device, and the first terminal device is different from the second terminal device.

In an optional implementation, the first device and the third device are a same device, and the first device is a terminal device.

In an optional implementation, the method further includes: receiving second information from the second device, where the second information is information about an adjusted first AI/ML model; and running the adjusted first AI/ML model based on the second information.

In an optional implementation, after running the adjusted first AI/ML model based on the second information, the method further includes: determining first adjustment information based on a running result of the adjusted first AI/ML model, where the first adjustment information is for re-adjusting the first AI/ML model; sending the first adjustment information to the second device; receiving third information from the second device, where the third information is information about a re-adjusted first AI/ML model; and running the re-adjusted first AI/ML model based on the third information.

In an optional implementation, the first information further includes first indication information, and the first indication information indicates whether to adjust the first AI/ML model.

In an optional implementation, the information for requesting to adjust the first AI/ML model includes one or more of the following: an identifier of a first adjustment range, where the first adjustment range includes one or more of the following: the first AI/ML model, a first network layer, a first AI/ML operator, a first AI/ML substructure, a first convolution kernel group, a first convolution kernel, a first connection, or a first neuron; an identifier of a first adjustment policy; an identifier of an object requested to be adjusted; or a quantity or a proportion of objects requested to be adjusted.

In an optional implementation, the capability information of the third device includes one or more of the following: an identifier of a type of the third device; at least one adjustment policy supported by the third device, where the at least one adjustment policy is for adjusting the first AI/ML model; execution efficiency of the third device for the at least one adjustment policy; an optimal amount of parallel computing that is supported by the third device; efficiency of running at least one object by the third device, where the at least one object includes one or more of the following: an AI/ML model, a network layer, an AI/ML operator, an AI/ML substructure, a convolution kernel group, a convolution kernel, a connection, or a neuron; or information about a bottleneck existing when the third device runs at least one object, where the at least one object includes one or more of the following: an AI/ML model, a network layer, an AI/ML operator, an AI/ML substructure, a convolution kernel group, a convolution kernel, a connection, or a neuron.

In an optional implementation, the at least one adjustment policy includes one or more of the following: structured pruning; unstructured pruning; fusing at least two operators; fusing at least two operator layers; fusing at least two network layers; or quantization.

In an optional implementation, the unstructured pruning includes one or more of the following: performing pruning at a basic unit of a connection or a neuron; performing pruning at a basic unit of a connection vector or a neuron vector; or performing pruning at a basic unit of a convolution kernel.

In an optional implementation, the structured pruning includes one or more of the following: performing pruning at a basic unit of a convolution kernel group; or performing pruning at a basic unit of a network layer or an AI/ML operator.

In an optional implementation, the bottleneck information indicates a computing power bottleneck and/or a memory access bottleneck.

In an optional implementation, the second information includes weight information corresponding to an AI/ML operator that is included in the adjusted first AI/ML model.

For technical effects brought by the second aspect or optional implementations, refer to descriptions of technical effects of the first aspect or corresponding implementations.

According to a third aspect, a third method for adjusting an AI/ML model is provided. The method may be performed by a second device, and the second device may be included in a first communication system. The second device is, for example, a network device, or may be another type of device, for example, a terminal device. The method includes: receiving first information from a first device, where the first information includes information for requesting to adjust a first AI/ML model, and/or the first information includes capability information of a third device, and the third device is configured to run the first AI/ML model; adjusting the first AI/ML model based on the first information; and sending second information, where the second information is information about an adjusted first AI/ML model.

In an optional implementation, the first device and the third device are a same device, and the first device is a terminal device.

In an optional implementation, the first device and the third device are different devices, the first device is a server or a first terminal device, the third device is a second terminal device, and the first terminal device is different from the second terminal device.

In an optional implementation, sending the second information includes: The second device forwards the second information to the third device via the first device; or the second device sends the second information to the third device.

In an optional implementation, after sending the second information, the method further includes: receiving first adjustment information from the third device; re-adjusting the first AI/ML model based on the first adjustment information; and sending third information, where the third information is information about a re-adjusted first AI/ML model.

In an optional implementation, the first information further includes first indication information, and the first indication information indicates whether to adjust the first AI/ML model.

In an optional implementation, the information for requesting to adjust the first AI/ML model includes one or more of the following: an identifier of a first adjustment range, where the first adjustment range includes one or more of the following: the first AI/ML model, a first network layer, a first AI/ML operator, a first AI/ML substructure, a first convolution kernel group, a first convolution kernel, a first connection, or a first neuron; an identifier of a first adjustment policy; an identifier of an object requested to be adjusted; or a quantity or a proportion of objects requested to be adjusted.

In an optional implementation, the capability information of the third device includes one or more of the following: an identifier of a type of the third device; at least one adjustment policy supported by the third device, where the at least one adjustment policy is for adjusting the first AI/ML model; execution efficiency of the third device for the at least one adjustment policy; an optimal amount of parallel computing that is supported by the third device; efficiency of running at least one object by the third device, where the at least one object includes one or more of the following: an AI/ML model, a network layer, an AI/ML operator, an AI/ML substructure, a convolution kernel group, a convolution kernel, a connection, or a neuron; or information about a bottleneck existing when the third device runs at least one object, where the at least one object includes one or more of the following: an AI/ML model, a network layer, an AI/ML operator, an AI/ML substructure, a convolution kernel group, a convolution kernel, a connection, or a neuron.

In an optional implementation, the at least one adjustment policy includes one or more of the following: structured pruning; unstructured pruning; fusing at least two operators; fusing at least two operator layers; fusing at least two network layers; or quantization.

In an optional implementation, the unstructured pruning includes one or more of the following: performing pruning at a basic unit of a connection or a neuron; performing pruning at a basic unit of a connection vector or a neuron vector; or performing pruning at a basic unit of a convolution kernel.

In an optional implementation, the structured pruning includes one or more of the following: performing pruning at a basic unit of a convolution kernel group; or performing pruning at a basic unit of a network layer or an AI/ML operator.

In an optional implementation, the bottleneck information indicates a computing power bottleneck and/or a memory access bottleneck.

In an optional implementation, the second information includes weight information corresponding to an AI/ML operator that is included in the adjusted first AI/ML model.

For technical effects brought by the third aspect or optional implementations, refer to descriptions of technical effects of the first aspect or corresponding implementations.

According to a fourth aspect, a fourth method for adjusting an AI/ML model is provided. The method may be applied to a first communication system, and the first communication system includes a first device, a second device, and a third device. The method includes: The first device sends fourth information to the second device, where the fourth information includes information about an AI/ML model that is supported by the third device; the second device receives the fourth information; the second device generates a second AI/ML model based on the fourth information; the second device sends fifth information, where the fifth information includes information about the second AI/ML model; the third device receives the fifth information; and the third device runs the second AI/ML model based on the fifth information.

In this embodiment of this application, the first device may send, to the second device, the information about the AI/ML model that is supported by the third device, and the second device may generate the AI/ML model based on the information. This is equivalent to a case in which when generating the AI/ML model, the second device can consider an actual case of the device on which the AI/ML model is deployed, so that the generated AI/ML model can adapt to a software and hardware environment of the third device, to improve adaptation between the AI/ML model and the device on which the AI/ML model is deployed. In this way, running performance of the AI/ML model can be improved.

In an optional implementation, the information about the second AI/ML model includes structure information and/or weight information of the second AI/ML model.

In an optional implementation, the first device and the third device are a same device, and the first device is a terminal device.

In an optional implementation, the first device and the third device are different devices, the first device is a server or a first terminal device, the third device is a second terminal device, and the first terminal device is different from the second terminal device.

For example, the second device is a device configured to generate (or construct) an AI/ML model, and the third device is a device configured to be deployed with the AI/ML model. The first device and the third device may be a same device; or the first device and the third device may be different devices. For example, the third device is a terminal device, and the first device is a server that manages the terminal device.

In an optional implementation, that the second device sends the fifth information includes: The second device forwards the fifth information to the third device via the first device; or the second device sends the fifth information to the third device. The first device may forward information between the first device and the third device. In this case, the second device only needs to interact with the first device. In particular, when there are a large quantity of third devices, a sending process of the second device can be simplified. Alternatively, the second device may directly interact with the third device, to shorten a transmission path.

In an optional implementation, after the third device runs the second AI/ML model based on the fifth information, the method further includes: The third device determines second adjustment information based on a running result of the second AI/ML model; the third device sends the second adjustment information to the second device; the second device receives the second adjustment information; the second device adjusts the second AI/ML model based on the second adjustment information; the second device sends sixth information, where the sixth information includes information about an adjusted second AI/ML model; the third device receives the sixth information; and the third device runs the adjusted second AI/ML model based on the sixth information. After the second AI/ML model is generated, the second AI/ML model may fail to achieve optimal running performance. In this case, the second AI/ML model may be adjusted, so that performance of the AI/ML model can be improved.

In an optional implementation, the second adjustment information includes one or more of the following: deleting an AI/ML operator, an AI/ML submodule, or a network layer in the second AI/ML model; adding an AI/ML operator, an AI/ML submodule, or a network layer in the second AI/ML model; adjusting a parameter of an AI/ML operator, an AI/ML submodule, or a network layer in the second AI/ML model; pruning the second AI/ML model; fusing at least two operators included in the second AI/ML model; fusing at least two operator layers included in the second AI/ML model; fusing at least two network layers included in the second AI/ML model; or quantizing the second AI/ML model. To request to adjust the second AI/ML model, there may be a plurality of adjustment manners, for example, adding or deleting an object in the second AI/ML model, adjusting a parameter corresponding to the second AI/ML model (for example, adjusting a weight), pruning, fusion, or quantization. Alternatively, there may be another adjustment manner. This is not limited. To adjust the second AI/ML model, there may be a plurality of adjustment manners. For example, a structure of the second AI/ML model may be adjusted (for example, adding or deleting the AI/ML operator or the AI/ML submodule), and/or a weight of the AI/ML model may be adjusted. It can be learned that, the adjustment manner provided in this embodiment of this application is flexible, and can not only implement large adjustment (for example, adjustment of the structure), but also implement flexible fine adjustment (for example, adjustment of the weight), so that the adjusted second AI/ML model can better adapt to a running environment of the third device, to achieve better running performance.

In an optional implementation, the information about the AI/ML model that is supported by the third device includes one or more of the following: an identifier of a type of the third device; information about an AI/ML operator that is supported by the third device; information about an AI/ML submodule that is supported by the third device, where one AI/ML submodule includes one or more AI/ML operators; information about an AI/ML model backbone network that is supported by the third device; one or more of efficiency, duration, a speed, or energy efficiency of running the supported AI/ML operator by the third device; one or more of efficiency, duration, a speed, or energy efficiency of running the supported AI/ML submodule by the third device; one or more of efficiency, duration, a speed, or energy efficiency of running the supported AI/ML model backbone network by the third device; or information about a bottleneck existing when the third device runs the supported AI/ML operator, AI/ML submodule, or AI/ML model backbone network. The information about the AI/ML model that is supported by the third device may not only include a structure, such as the AI/ML operator and the AI/ML submodule, supported by the third device, but also include a parameter such as efficiency, duration, a speed, or equivalence of running some objects (for example, the AI/ML operator or the AI/ML submodule) by the third device. In this way, the second device can not only determine, based on the information about the AI/ML model that is supported by the third device, model structures supported by the third device, but also select a structure with good running performance for the third device from the model structures as much as possible to construct the second AI/ML model, to improve overall running performance of the second AI/ML model by the third device.

According to a fifth aspect, a fifth method for adjusting an AI/ML model is provided. The method may be performed by a first device, and the first device may be included in a first communication system. The first device is, for example, a server or a terminal device, or may be another type of device. The method includes: sending fourth information to a second device, where the fourth information includes information about an AI/ML model that is supported by a third device, and the fourth information is for generating an AI/ML model.

In an optional implementation, the first device and the third device are different devices, the first device is a server or a first terminal device, the third device is a second terminal device, and the first terminal device is different from the second terminal device.

In an optional implementation, the first device and the third device are a same device, and the first device is a terminal device.

In an optional implementation, the method further includes: receiving fifth information from the second device, where the fifth information includes information about a second AI/ML model; and running the second AI/ML model based on the fifth information.

In an optional implementation, the information about the second AI/ML model includes structure information and/or weight information of the second AI/ML model.

In an optional implementation, after running the second AI/ML model based on the fifth information, the method further includes: determining second adjustment information based on a running result of the second AI/ML model, where the second adjustment information is for adjusting the second AI/ML model; sending the second adjustment information to the second device; receiving sixth information from the second device, where the sixth information includes information about an adjusted second AI/ML model; and running the adjusted second AI/ML model based on the sixth information.

In an optional implementation, the second adjustment information includes one or more of the following: deleting an AI/ML operator, an AI/ML submodule, or a network layer in the second AI/ML model; adding an AI/ML operator, an AI/ML submodule, or a network layer in the second AI/ML model; adjusting a parameter of an AI/ML operator, an AI/ML submodule, or a network layer in the second AI/ML model; pruning the second AI/ML model; fusing at least two operators included in the second AI/ML model; fusing at least two operator layers included in the second AI/ML model; fusing at least two network layers included in the second AI/ML model; or quantizing the second AI/ML model.

In an optional implementation, the information about the AI/ML model that is supported by the third device includes one or more of the following: an identifier of a type of the third device; information about an AI/ML operator that is supported by the third device; information about an AI/ML submodule that is supported by the third device, where one AI/ML submodule includes one or more AI/ML operators; information about an AI/ML model backbone network that is supported by the third device; one or more of efficiency, duration, a speed, or energy efficiency of running the supported AI/ML operator by the third device; one or more of efficiency, duration, a speed, or energy efficiency of running the supported AI/ML submodule by the third device; one or more of efficiency, duration, a speed, or energy efficiency of running the supported AI/ML model backbone network by the third device; or information about a bottleneck existing when the third device runs the supported AI/ML operator, AI/ML submodule, or AI/ML model backbone network.

For technical effects brought by the fifth aspect or optional implementations, refer to descriptions of technical effects of the fourth aspect or corresponding implementations.

According to a sixth aspect, a sixth method for adjusting an AI/ML model is provided. The method may be performed by a second device, and the second device may be included in a first communication system. The second device is, for example, a network device, or may be another type of device, for example, a terminal device. The method includes: receiving fourth information from a first device, where the fourth information includes information about an AI/ML model that is supported by a third device; generating a second AI/ML model based on the fourth information; and sending fifth information, where the fifth information includes information about the second AI/ML model.

In an optional implementation, the information about the second AI/ML model includes structure information and/or weight information of the second AI/ML model.

In an optional implementation, the first device and the third device are a same device, and the first device is a terminal device.

In an optional implementation, the first device and the third device are different devices, the first device is a server or a first terminal device, the third device is a second terminal device, and the first terminal device is different from the second terminal device.

In an optional implementation, sending the fifth information includes: forwarding the fifth information to the third device via the first device; or sending the fifth information to the third device.

In an optional implementation, after sending the fifth information, the method further includes: receiving second adjustment information from the third device; adjusting the second AI/ML model based on the second adjustment information; and sending sixth information, where the sixth information includes information about an adjusted second AI/ML model.

In an optional implementation, the second adjustment information includes one or more of the following: deleting an AI/ML operator, an AI/ML submodule, or a network layer in the second AI/ML model; adding an AI/ML operator, an AI/ML submodule, or a network layer in the second AI/ML model; adjusting a parameter of an AI/ML operator, an AI/ML submodule, or a network layer in the second AI/ML model; pruning the second AI/ML model; fusing at least two operators included in the second AI/ML model; fusing at least two network layers included in the second AI/ML model; or quantizing the second AI/ML model.

In an optional implementation, the information about the AI/ML model that is supported by the third device includes one or more of the following: an identifier of a type of the third device; information about an AI/ML operator that is supported by the third device; information about an AI/ML submodule that is supported by the third device, where one AI/ML submodule includes one or more AI/ML operators; information about an AI/ML model backbone network that is supported by the third device; one or more of efficiency, duration, a speed, or energy efficiency of running the supported AI/ML operator by the third device; one or more of efficiency, duration, a speed, or energy efficiency of running the supported AI/ML submodule by the third device; one or more of efficiency, duration, a speed, or energy efficiency of running the supported AI/ML model backbone network by the third device; or information about a bottleneck existing when the third device runs the supported AI/ML operator, AI/ML submodule, or AI/ML model backbone network.

For technical effects brought by the sixth aspect or optional implementations, refer to descriptions of technical effects of the fourth aspect or corresponding implementations.

According to a seventh aspect, a communication apparatus is provided. The communication apparatus may be the first device according to any one of the first aspect to the sixth aspect. The communication apparatus has a function of the first device. The communication apparatus is, for example, the first device, a large device including the first device, or a functional module in the first device, such as a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general name for these functional modules.

In an optional implementation, the transceiver unit (or the sending unit) is configured to: send first information to a second device, where the first information includes information for requesting to adjust a first AI/ML model, and/or the first information includes capability information of a third device, and the second device is configured to adjust the first AI/ML model, and the third device is configured to run the first AI/ML model.

In an optional implementation, the transceiver unit (or the sending unit) is configured to: send fourth information to a second device, where the fourth information includes information about an AI/ML model that is supported by a third device, and the fourth information is for generating an AI/ML model, and the second device is configured to generate a first AI/ML model, and the third device is configured to run the first AI/ML model.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the function of the first device according to any one of the first aspect to the sixth aspect.

According to an eighth aspect, a communication apparatus is provided. The communication apparatus may be the second device according to any one of the first aspect to the sixth aspect. The communication apparatus has a function of the second device. The communication apparatus is, for example, the second device, a large device including the second device, or a functional module in the second device, such as a baseband apparatus or a chip system. In an optional implementation, the communication apparatus includes a baseband apparatus and a radio frequency apparatus. In another optional implementation, the communication apparatus includes a processing unit (sometimes also referred to as a processing module) and a transceiver unit (sometimes also referred to as a transceiver module). For an implementation of the transceiver unit, refer to descriptions of the third aspect.

In an optional implementation, the transceiver unit (or a receiving unit) is configured to: receive first information from a first device, where the first information includes information for requesting to adjust a first AI/ML model, and/or the first information includes capability information of a third device, and the third device is configured to run the first AI/ML model; the processing unit is configured to: adjust the first AI/ML model based on the first information; and the transceiver unit (or a sending unit) is configured to: send second information, where the second information is information about an adjusted first AI/ML model.

In an optional implementation, the transceiver unit (or a receiving unit) is configured to: receive fourth information from a first device, where the fourth information includes information about an AI/ML model that is supported by a third device; the processing unit is configured to: generate a second AI/ML model based on the fourth information; and the transceiver unit (or a sending unit) is configured to: send fifth information, where the fifth information includes information about the second AI/ML model.

In an optional implementation, the communication apparatus further includes a storage unit (sometimes also referred to as a storage module). The processing unit is configured to be coupled to the storage unit, and execute a program or instructions in the storage unit, to enable the communication apparatus to perform the function of the second device according to any one of the first aspect to the sixth aspect.

According to a ninth aspect, a communication apparatus is provided. The communication apparatus may be a first device, or may be a chip or a chip system used in the first device. The communication apparatus includes a communication interface and a processor, and optionally, further includes a storage. The storage is configured to store a computer program. The processor is coupled to the storage and the communication interface. When the processor reads the computer program or instructions, the communication apparatus is enabled to perform the method performed by the first device in the foregoing aspects.

According to a tenth aspect, a communication apparatus is provided. The communication apparatus may be a second device, or may be a chip or a chip system used in the second device. The communication apparatus includes a communication interface and a processor, and optionally, further includes a storage. The storage is configured to store a computer program. The processor is coupled to the storage and the communication interface. When the processor reads the computer program or instructions, the communication apparatus is enabled to perform the method performed by the second device in the foregoing aspects.

According to an eleventh aspect, a first communication system is provided, and includes a first device, a second device, and a third device, where the first device is configured to perform the method performed by the first device according to any one of the first aspect to the sixth aspect; the second device is configured to perform the method performed by the second device according to any one of the first aspect to the sixth aspect; and the third device is configured to perform the method performed by the third device according to any one of the first aspect to the sixth aspect. For example, the first device may be implemented by the communication apparatus according to the seventh aspect or the ninth aspect; and the second device may be implemented by the communication apparatus according to the eighth aspect or the tenth aspect.

In an optional implementation, the first device sends first information to the second device; the second device receives the first information, where the first information includes information for requesting to adjust a first AI/ML model, and/or the first information includes capability information of the third device; the second device adjusts the first AI/ML model based on the first information; the second device sends second information, where the second information is information about an adjusted first AI/ML model; the third device receives the second information; and the third device runs the adjusted first AI/ML model based on the second information.

In an optional implementation, the first device sends fourth information to the second device, where the fourth information includes information about an AI/ML model that is supported by the third device; the second device receives the fourth information; the second device generates a second AI/ML model based on the fourth information; the second device sends fifth information, where the fifth information includes information about the second AI/ML model; the third device receives the fifth information; and the third device runs the second AI/ML model based on the fifth information.

According to a twelfth aspect, a computer-readable storage medium is provided, where the computer-readable storage medium is configured to store a computer program or instructions. When the computer program or the instructions are run, the method performed by the first device, the second device, or the third device in the foregoing aspects is implemented.

According to a thirteenth aspect, a computer program product including instructions is provided. When the computer program product runs on a computer, the method according to the foregoing aspects is implemented.

According to a fourteenth aspect, a chip system is provided, and includes a processor and an interface, where the processor is configured to invoke instructions from the interface and run the instructions, to enable the chip system to implement the method in the foregoing aspects.

### BRIEF DESCRIPTION OF DRAWINGS

FIG. 1A is a diagram of a structure of an AI/ML model;
FIG. 1B is a diagram of a communication network architecture to which an embodiment of this application is applicable;
FIG. 2 is a flowchart of a method for adjusting an AI/ML model according to an embodiment of this application;
FIG. 3 is a diagram of several pruning policies according to an embodiment of this application;
FIG. 4 is a flowchart of a method for generating an AI/ML model according to an embodiment of this application;
FIG. 5 is a diagram of an apparatus according to an embodiment of this application; and
FIG. 6 is a diagram of another apparatus according to an embodiment of this application.

### DESCRIPTION OF EMBODIMENTS

To make objectives, technical solutions, and advantages of embodiments of this application clearer, the following further describes in detail embodiments of this application with reference to accompanying drawings.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. For example, A/B indicates A or B. "At least one item (piece) of the following" or a similar expression thereof means any combination of these items, including a singular item (piece) or any combination of a plurality of items (pieces). For example, at least one item (piece) of a, b, or c indicates a, b, c, a and b, a and c, b and c, or a, b, and c, where a, b, and c may be singular or plural.

Ordinal numbers, such as "first" and "second", mentioned in embodiments of this application are used for distinguishing between a plurality of objects, but are not intended to limit sizes, content, orders, time sequences, priorities, importance, and the like of the plurality of objects. For example, first information and second information may be same information, or may be different information. In addition, this name does not indicate that the two pieces of information occupy different resources, sending sequences, a transmit end/receive end, content, sizes, application scenarios, priorities, importance, or the like. In addition, step numbers in embodiments described in this application are merely intended to distinguish between different steps, but are not intended to limit a sequence of the steps. For example, S201 may occur before S202, may occur after S202, or may occur simultaneously with S202.

The following describes a part of terms or concepts in embodiments of this application, to facilitate understanding of a person skilled in the art.

In embodiments of this application, a terminal device is a device having wireless receiving and sending functions, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect a person, an object, a machine, and the like, and may be widely used in various scenarios, for example, including but not limited to terminal devices in the following scenarios: a sensing scenario, cellular communication, device-to-device (device-to-device, D2D) communication, vehicle to everything (vehicle to everything, V2X), machine-to-machine/machine-type communication (machine-to-machine/machine-type communication, M2M/MTC), the internet of things (internet of things, IoT), virtual reality (virtual reality, VR), augmented reality (augmented reality, AR), industrial control (industrial control), self-driving (self-driving), remote medical (remote medical) health care, a smart grid (smart grid), smart furniture, a smart office, smart wearable, smart transportation, a smart city (smart city), an unmanned aerial vehicle, and a robot. The terminal device may sometimes be referred to as a UE, a terminal, an access station, a UE station, a remote station, a wireless communication device, a user apparatus, or the like.

In embodiments of this application, a communication apparatus configured to implement a function of the terminal device may be a terminal device, or may be an apparatus, for example, a chip system, that can support the terminal device in implementing the function. The apparatus may be mounted in the terminal device. In the technical solutions provided in embodiments of this application, the technical solutions provided in embodiments of this application are described by using an example in which the apparatus configured to implement the function of the terminal device is a terminal device. In addition, for ease of description, in embodiments of this application, an example in which the terminal device is a UE is used for description.

A network device in embodiments of this application includes, for example, an access network device and/or a core network device. The access network device is a device having wireless receiving and sending functions, and is configured to communicate with the terminal device. The access network device includes but is not limited to a base station (base transceiver station (base transceiver station, BTS)), a NodeB (NodeB), an evolved NodeB (evolved NodeB, eNodeB/eNB), or a next-generation NodeB (next generation NodeB, gNodeB/gNB), a transmission reception point (transmission reception point, TRP), a base station subsequently evolved from the 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a pico base station, a small cell, a relay station, or the like. A plurality of base stations may support networks using a same access technology, or may support networks using different access technologies. The base station may include one or more co-site or non-co-site transmission reception points. Alternatively, the access network device may be a radio controller in a cloud radio access network (cloud radio access network, CRAN) scenario, a central unit (central unit, CU), and/or a distributed unit (distributed unit, DU). Alternatively, the access network device may be a server or the like. For example, a network device in a V2X technology may be a road side unit (road side unit, RSU). The following uses an example in which the access network device is a base station as an example for description. The base station may communicate with the terminal device, or may communicate with the terminal device via a relay station. The terminal device may communicate with a plurality of base stations in different access technologies. The core network device is configured to implement functions such as mobility management, data processing, session management, and policy and charging. Names of devices that implement core network functions in systems of different access technologies may be different. This is not limited in embodiments of this application. In an example of a 5th generation (5th generation, 5G) mobile communication technology system, the core network device includes an access and mobility management function (access and mobility management function, AMF), a session management function (session management function, SMF), a policy control function (policy control function, PCF), a user plane function (user plane function, UPF), and the like.

In embodiments of this application, a communication apparatus configured to implement a function of the network device may be a network device, or may be an apparatus, for example, a chip system, that can support the network device in implementing the function. The apparatus may be mounted in the network device. In the technical solutions provided in embodiments of this application, the technical solutions provided in embodiments of this application are described by using an example in which the apparatus configured to implement the function of the network device is a network device.

An AI model is a specific implementation of an AI function. The AI model indicates a mapping relationship between an input and an output that are of the model. The AI model may be a neural network, a linear regression model, a decision tree model, a support vector machine (support vector machine, SVM), a Bayesian network, a Q-learning model, another machine learning model, or the like. In embodiment of this application, the AI function may include at least one of the following: data collection (collecting training data and/or inference data), data preprocessing, model training (also referred to as model learning), model information release (configuring model information), model verification (verifying a trained model), model inference (using a model obtained through training for inference), or inference result release. Inference may also be referred to as prediction. Optionally, the AI model may include an ML model.

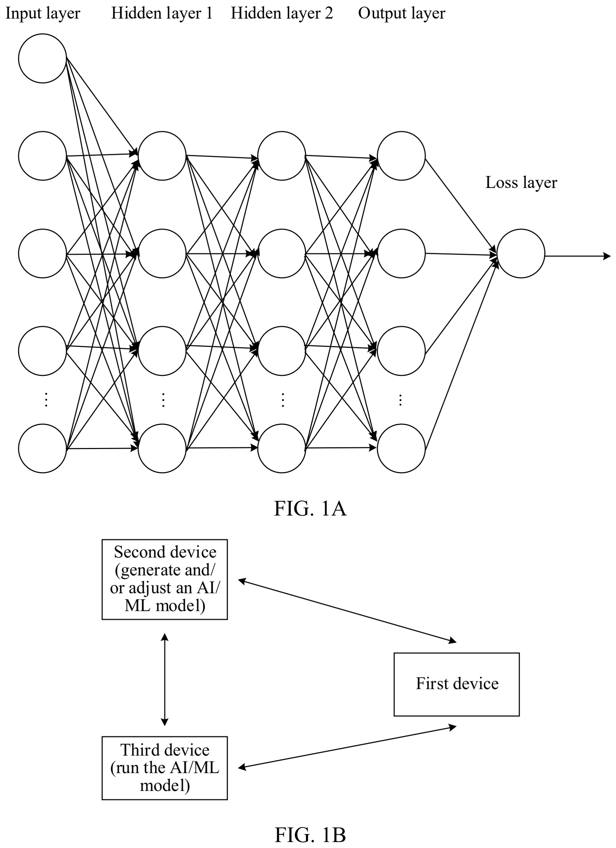

In an example of a neural network-based AI/ML model, an understanding of the AI/ML model includes that the AI/ML model may include at least one layer, and the "layer" may include a "network layer". Each "network layer" may include at least one node, and the "node" may also be referred to as a "neuron". In an example of a model shown in FIG. 1A, an input layer, a hidden layer, an output layer, and a loss layer may all be considered as the network layer. At least one AI/ML operator, such as a convolution operator or a fully-connected operator, may be included between network layers. A neuron of a specific network layer is connected to a neuron of an adjacent network layer via the AI/ML operator, and one connection may be considered as an operation. In an example of a connection between the input layer and the hidden layer 1 shown in FIG. 1A, a fully-connected operator is between the input layer and the hidden layer 1, that is, each neuron of the input layer is connected to each neuron of the hidden layer 1. The fully-connected operator or operation may also be described by using a "fully-connected layer". In this case, a "layer" and an "AI/ML operator" that are in the fully-connected layer are equivalent and interchangeable concepts, and may be referred to as an "operator layer". In some cases, the "operator layer" may also include a previous network layer and/or a next network layer adjacent to the "operator layer". Still in the example of the connection between the input layer and the hidden layer 1 shown in FIG. 1A, the "fully-connected layer" may alternatively include the "input layer" and/or the "hidden layer 1". In addition to the fully-connected layer, an AL/ML model may further include a convolutional layer. For example, in a convolutional neural network, one convolution operator may include one or more convolution kernels. Optionally, the one or more convolution kernels may be further divided into at least one convolution kernel group, and the convolution kernel group may include at least one convolution kernel. The "convolution kernel group" may also be referred to as a "filter". One AI/ML model may include one or more AI/ML operators. A substructure (or submodule) of the AI/ML model may include one or more AI/ML operators.

FIG. 1A is a diagram of a structure of an AI/ML model. The AI/ML model includes five network layers, namely an input layer (input layer), a hidden layer (hidden layer) 1, a hidden layer 2, an output layer (output layer), and a loss layer (loss layer). The loss layer corresponds to a cross entropy (cross entropy) loss function. In FIG. 1A, a circle indicates a neuron, and a connection line between circles of network layers indicates a connection. It can be learned that, a fully-connected operator is between the input layer and the hidden layer 1. Optionally, the fully-connected operator may also be indicated by using a "fully-connected layer".

The technical solutions provided in embodiments of this application may be applied to a 4th generation (4th generation, 4G) mobile communication technology system, for example, a long term evolution (long term evolution, LTE) system, may be applied to a 5G system, for example, a new radio (new radio, NR) system, or may be applied to a next generation mobile communication system or another similar communication system, for example, a 6th generation (6th generation, 6G) mobile communication technology system. This is not specifically limited. In addition, the technical solutions provided in embodiments of this application may be applied to a D2D scenario, for example, an NR-D2D scenario, or may be applied to a V2X scenario, for example, an NR-V2X scenario. For example, the technical solutions may be applied to fields such as a smart home, smart driving, assisted driving, or intelligent connected vehicles.

FIG. 1B shows a communication network architecture to which an embodiment of this application is applicable. FIG. 1B includes a second device and a third device, and optionally, may further include a first device. The second device may be configured to generate (or construct) and/or adjust an AI/ML model; and the third device may be configured to run the AI/ML model. It may be understood that, the second device may deploy the generated AI/ML mode and/or an adjusted AI/ML model in the third device, and the third device runs the AI/ML model. The second device is, for example, a network device, such as an access network device, a core network device, or an operation, administration, and maintenance (operation, administration, and maintenance, OAM). The third device is, for example, a UE.

The first device and the third device may be a same device. For example, the first device and the third device are a same UE. Alternatively, the first device and the third device may be different devices, and the first device can communicate with the second device and the third device. For example, the first device is a server, and the server is, for example, configured to manage the third device. Alternatively, both the first device and the third device are UEs, but the first device and the third device are different UEs. For example, the first device is a first UE, the third device is a second UE, and the two UEs are different devices.

For example, the first device and the third device belong to a same manufacturer, the third device is a UE, and the first device is a server configured to manage a UE produced by the manufacturer; the first device and the third device are different UEs; or the first device and the third device are a same UE.

To better describe embodiments of this application, the following describes, with reference to the accompanying drawings, methods provided in embodiments of this application. In embodiments of this application, a device on which an AI/ML model is "deployed" may be a device running the AI/ML model. For example, the "deployed" may also be understood as "running" or "using". For example, in FIG. 1B, the third device is the device on which the AI/ML model is deployed. In this case, the third device may run the AI/ML model, and obtain, in a process such as inference performed by using the AI/ML model, an inference result that is output by the AI/ML model. However, although the second device may generate and/or adjust the AI/ML model, the second device does not run the AI/ML model. Therefore, it is not considered that the AI/ML model is deployed on the first device. Unless otherwise specified hereinafter, in the accompanying drawings corresponding to embodiments of this application, steps indicated by dashed lines are all optional steps. The methods provided in embodiments of this application may be applied to the network architecture shown in FIG. 1B. For example, a first device in embodiments of this application may be the first device in FIG. 1B; a second device described in embodiments of this application may be the second device in FIG. 1B; and a third device described in embodiments of this application may be the third device in FIG. 1B.

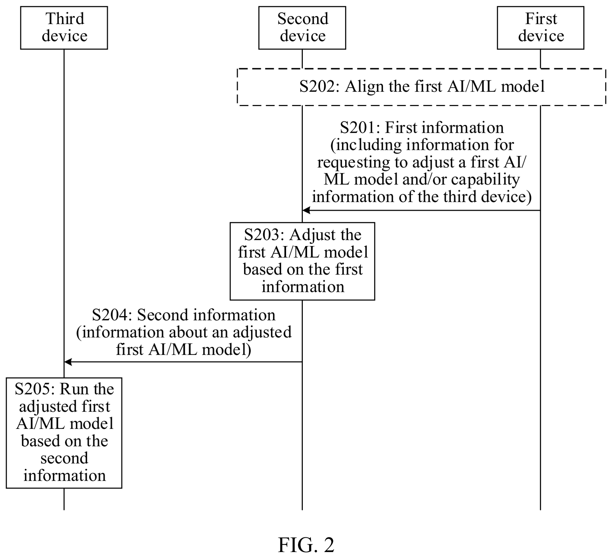

An embodiment of this application provides a method for adjusting a model. FIG. 2 is a flowchart of the method.

S201: A first device sends first information to a second device. Correspondingly, the second device receives the first information from the first device. The first information may include information for requesting to adjust a first AI/ML model and/or include capability information of a third device. For example, the information for requesting to adjust the first AI/ML model is referred to as adjustment request information. The adjustment request information and the capability information may be sent by using one message, or may be separately sent by using different messages.

The first AI/ML model has been, for example, deployed on the third device. For example, the first device and the third device are a same device. Before the third device runs the first AI/ML model, or in a process in which the third device runs the first AI/ML model, or after the third device completes running the first AI/ML model, the third device may send the first information to the second device to request to adjust the first AI/ML model. The device on which the first AI/ML model is deployed sends the first information to the second device, so that the first information is more consistent with an actual software and hardware environment of the third device. In this way, adjustment precision can be improved.

For another example, the first device and the third device are different devices. For example, the first device is a server configured to manage the third device, and the first device may store information about the third device, for example, store the capability information of the third device. The first device may directly send the capability information to the second device, or the first device may determine the adjustment request information based on the information about the third device, for example, the capability information, and then send the adjustment request information and/or the capability information to the second device. The first device may manage one or more devices. In this case, the first device may send, to the second device at a time, capability information and/or adjustment information corresponding to the one or more devices, so that the second device does not need to separately receive information from a plurality of devices. This helps simplify a receiving operation of the second device. In FIG. 2, an example in which the third device and the first device are different devices is used.

Optionally, the first information may further include first indication information, and the first indication information may indicate whether to adjust the first AI/ML model. Whether to adjust the first AI/ML model indicates an adjustment willingness of the first device. For example, if the first indication information indicates "to adjust the first AI/ML model", the first information may further include the adjustment request information and/or the capability information, and the second device may further parse the adjustment request information and/or the capability information included in the first information. Alternatively, if the first indication information indicates "not to adjust the first AI/ML model", the first information may not need to include the adjustment request information and/or the capability information. In this way, overheads of the first information can be reduced. Alternatively, if the first indication information indicates "not to adjust the first AI/ML model", the first information may include the adjustment request information and/or the capability information, but the second device may not parse the adjustment request information and/or the capability information. In this way, a probability that the second device performs an invalid processing process can be reduced. Alternatively, if the first device considers not to adjust the first AI/ML model, the first device may not send the first information.

Optionally, the adjustment request information may include (or indicate) one or more of the following: an identifier of a first adjustment range, an identifier of a first adjustment policy, an identifier of an object requested to be adjusted, or a quantity or a proportion of objects requested to be adjusted. In embodiments of this application, the "policy" may alternatively be a "method" or a "solution". For example, the "adjustment policy" may also be referred to as an "adjustment method" or an "adjustment solution".

An identifier that is of the first AI/ML model and that is included in the adjustment request information is, for example, an identity (identity, ID) of the first AI/ML model or an index of the first AI/ML model, or may be a function that can be implemented by the first AI/ML model. The first AI/ML model may be indicated by using the function.

The adjustment request information includes the identifier of the first adjustment range, where the first adjustment range may include one or more of the following: the first AI/ML model, a first network layer, a first AI/ML operator, a first AI/ML substructure, a first convolution kernel group, a first convolution kernel, a first connection, or a first neuron. The first network layer belongs to the first AI/ML model. The first network layer may include one or more network layers, and the one or more network layers are a part or all of network layers in the first AI/ML model. The first AI/ML operator belongs to the first AI/ML model. The first AI/ML operator may include one or more AI/ML operators, and the one or more AI/ML operators are a part or all of AI/ML operators in the first AI/ML model. The first AI/ML substructure belongs to the first AI/ML model. The first AI/ML substructure may include one or more AI/ML substructures, and the one or more AI/ML substructures are a part or all of AI/ML substructures in the first AI/ML model. The first convolution kernel group belongs to the first AI/ML model. The first convolution kernel group may include one or more convolution kernel groups, and the one or more convolution kernel groups are a part or all of convolution kernel groups in the first AI/ML model. The first convolution kernel belongs to the first AI/ML model. The first convolution kernel may include one or more convolution kernels, and the one or more convolution kernels are a part or all of convolution kernels in the first AI/ML model. The first connection belongs to the first AI/ML model. The first connection may include one or more connections, and the one or more connections are a part or all of connections in the first AI/ML model. The first neuron belongs to the first AI/ML model. The first neuron may include one or more neurons, and the one or more neurons are a part or all of neurons in the first AI/ML model.

Optionally, if the first adjustment range includes only one of the foregoing items, the identifier of the first adjustment range may be an identifier of the item, or may be different from an identifier of the item. If the first adjustment range includes a plurality of items, identifiers of the plurality of items may be used as the identifier of the first adjustment range; or the identifier of the first adjustment range is different from identifiers of the plurality of items. However, the identifier of the first adjustment range can indicate the plurality of items. In this case, overheads of the identifier of the first adjustment range may be smaller than overheads of the identifiers of the plurality of items. In this way, overheads of the adjustment request information can be reduced.

For example, the first adjustment range includes only the first AI/ML model. In this case, the identifier of the first adjustment range may be the identifier of the first AI/ML model; or the identifier of the first adjustment range is different from the identifier of the first AI/ML model. The identifier of the first AI/ML model is, for example, the identity (ID) of the first AI/ML model or the index of the first AI/ML model, or may be the function that can be implemented by the first AI/ML model. The first AI/ML model may be indicated by using the function.

For another example, the first adjustment range includes the first network layer and the first AI/ML operator, and the identifier of the first adjustment range may be different from either an identifier of the first network layer or an identifier of the first AI/ML operator. However, the identifier of the first adjustment range can indicate the first network layer and the first AI/ML operator.

The adjustment request information includes the identifier of the first adjustment policy, and the first adjustment policy is, for example, an adjustment policy requested to be used. Alternatively, it is understood as that the adjustment request information is for requesting to use the first adjustment policy to adjust the first AI/ML model. The first adjustment policy includes, for example, one or more of policies such as a pruning policy, a fusion policy, or a quantization policy, or may include another adjustment policy. These adjustment policies are described hereinafter. Optionally, the identifier of the first adjustment policy is, for example, an identity (ID) of the first adjustment policy, a name of the first adjustment policy, an index of the first adjustment policy, or a level to which the first adjustment policy belongs. The first device may determine the first adjustment policy based on the ID of the first adjustment policy, the name of the first adjustment policy, the index of the first adjustment policy, or the level to which the first adjustment policy belongs. In this way, the adjustment request information does not need to include specific content of the first adjustment policy, and the overheads of the adjustment request information can be reduced.

The adjustment request information includes the identifier of the object requested to be adjusted, where the object requested to be adjusted may include one or more of the following: a network layer, an AI/ML operator, a convolution kernel group, a convolution kernel, a connection, or a neuron. Optionally, the object requested to be adjusted may be an object in the first adjustment range. For example, the adjustment request information may request to adjust an "object requested to be adjusted" and that is in the "first adjustment range". Alternatively, this is understood as that the "object requested to be adjusted" is an object in the "first adjustment range". For example, the "first adjustment range" is the first AI/ML operator, and the object requested to be adjusted is the convolution kernel. In this case, the second device can determine, based on the identifier that is of the first adjustment range and that is included in the adjustment request information and an identifier that is of the convolution kernel and that is included in the adjustment request information, that the adjustment request information is for a convolution kernel in the first AI/ML operator.

The adjustment request information may include the quantity of objects that are requested to be adjusted and that are in the first adjustment range, or include the proportion of objects that are requested to be adjusted and that are in the first adjustment range. The information is included, so that the second device can determine, based on the information, information such as computing power required in an adjustment process. For example, the adjustment request information may include information about a pruning quantity. The information about the pruning quantity may indicate a quantity of objects currently requested to be pruned, and the object requested to be pruned is the object requested to be adjusted. Alternatively, the adjustment request information may include information about a reservation quantity. The information about the reservation quantity may indicate a quantity of objects that are currently not requested to be adjusted or that currently do not need to be adjusted, and a total quantity of objects included in the first adjustment range minus the reservation quantity is a quantity of objects currently requested to be adjusted. Alternatively, the adjustment request information may include information about a change quantity. For example, before S201, if the first device has requested the second device to adjust the first adjustment range, the information about the change quantity may indicate a change amount of a quantity of objects currently requested to be adjusted relative to a quantity of objects requested to be adjusted last time. Alternatively, the adjustment request information may include information about a pruning proportion, and the information about the pruning proportion may indicate a proportion of objects currently requested to be pruned in the first adjustment range. Alternatively, the adjustment request information may include information about a reservation proportion. The information about the reservation proportion indicates a proportion of objects that are currently not requested to be adjusted or that currently do not need to be adjusted in the first adjustment range. The information about the reservation proportion is used, and this is equivalent to indicating a proportion of objects currently requested to be adjusted in the first adjustment range. Alternatively, the adjustment request information may include information about a change proportion. For example, before S201, if the first device has requested the second device to adjust the first adjustment range, the information about the change proportion may indicate a change amount of a proportion of objects currently requested to be adjusted in the first adjustment range relative to a proportion of objects requested to be adjusted last time in the first adjustment range. Optionally, if the object that is requested to be adjusted and that is indicated by the adjustment request information includes one or more items of the network layer, the AI/ML operator, the convolution kernel group, the convolution kernel, the connection, or the neuron, the adjustment request information may separately include a quantity or a proportion of objects in each of the items.

The first information may include the adjustment request information and/or the capability information of the third device. The adjustment request information is described above. The following describes the capability information.

Optionally, the capability information may include one or more of the following: an identifier of a type of the third device; an identifier of a model of the third device; at least one adjustment policy supported by the third device; one or more of execution efficiency (or running efficiency), execution duration (or running duration), an execution speed (or a running speed), or execution energy efficiency (or running energy efficiency) of the third device for the at least one adjustment policy; an optimal amount of parallel computing (or parallel computing units) that is supported by the third device; one or more of efficiency, duration, a speed, or energy efficiency of running the at least one object by the third device; information about a bottleneck existing when the third device runs at least one object; one or more of efficiency, duration, a speed, or energy efficiency of running a second network layer by the third device; or information about a bottleneck existing when the third device runs the second network layer. The following separately provides descriptions.

The capability information may include the identifier of the type of the third device or the identifier of the model of the third device. For example, a device of a same type or model as the third device may have a same capability, and is applicable to an adjusted first AI/ML model.

The at least one adjustment policy is, for example, all or a part of adjustment policies supported by the third device, and the adjustment policy is a policy for adjusting an AI/ML model. For example, the at least one adjustment policy may be for adjusting one or more AI/ML models, and the one or more AI/ML models may include the first AI/ML model. The at least one adjustment policy includes, for example, one or more policies such as a pruning policy, a fusion policy, or a quantization policy, or may include another adjustment policy. Pruning the AI/ML model may be understood as pruning off a part of a connection or a part of a structure of the AI/ML model on a premise that inference precision of the AI/ML model is affected as little as possible, to obtain a simplified AI/ML model. The fusion policy includes, for example, an operator fusion policy, and may be understood as replacing a plurality of "small" operators by using a single "large" operator while a same function or a function with slightly poor precision is completed, to optimize a running speed and/or storage consumption. The quantization policy may also be referred to as a model quantization policy, and is a policy of converting a weight of the AI/ML model from high precision to low precision. For example, the weight of the AI/ML model is converted from a 32-bit floating point number to an 8-bit integer number. Optionally, compared with accuracy of a model inference result of an AI/ML model before quantization, accuracy of an inference result of the AI/ML model that is processed according to the quantization policy cannot be greatly deteriorated. In other words, the accuracy of the inference result of the quantized AI/ML model slightly differs from the accuracy of the inference result before quantization. It may be understood as that the quantization policy can ensure the accuracy of the inference result of the quantized AI/ML model. Optionally, the first adjustment policy in the foregoing adjustment request information includes, for example, one or more of the at least one adjustment policy.

For example, the at least one adjustment policy may include: structured pruning; unstructured pruning; fusing at least two operators; fusing at least two network layers; fusing at least two operator layers; or quantization. The structured pruning and the unstructured pruning belong to the pruning policy. Fusing at least two operators, fusing at least two operator layers, and fusing at least two network layers belong to the fusion policy. Quantization belongs to the quantization policy. Optionally, the fusion policy may include an operator fusion policy. For example, the operator fusion policy includes fusing at least two operators. The "operator" herein is, for example, an AI/ML operator. For another example, if the foregoing concept "operator layer" is introduced, another operator fusion policy may include fusing at least two operator layers. In addition to the operator fusion policy, the fusion policy may further include another policy. This is not limited.

The unstructured pruning may include one or more of the following: performing pruning at a basic unit of a connection or a neuron; performing pruning at a basic unit of a connection vector or a neuron vector; or performing pruning at a basic unit of a convolution kernel. The structured pruning may include one or more of the following: performing pruning at a basic unit of a convolution kernel group; or performing pruning at a basic unit of a network layer or an AI/ML operator. For example, the at least one adjustment policy that is supported by the third device and that is included in the capability information may include the unstructured pruning and/or the structured pruning. If the unstructured pruning is included, it indicates that the third device supports one or more policies included in the unstructured pruning. If the structured pruning is included, it indicates that the third device supports one or more policies included in the structured pruning. For another example, the at least one adjustment policy that is supported by the third device and that is included in the capability information may include one specific or several specific policies belonging to the unstructured pruning, and/or include one specific or several specific policies belonging to the structured pruning, so that the second device can directly determine specific adjustment policies supported by the third device.
① Performing pruning at a basic unit of a connection or a neuron may also be referred to as fine-grained (fine-grained) pruning. This is a pruning policy at a small granularity.
② Performing pruning at a basic unit of a connection vector or a neuron vector may also be referred to as vector-level (vector-level) pruning. Compared with the fine-grained pruning, the vector-level pruning is at a large pruning granularity. For example, according to the pruning policy, pruning may be performed on the neuron vector. Therefore, the pruning policy belongs to intra-convolution kernel (intra-kernel) pruning.
③ Performing pruning at a basic unit of a convolution kernel is also referred to as kernel (kernel) pruning. According to the pruning policy, the entire convolution kernel may be removed.
(4) One convolution kernel group may be considered as one filter. Therefore, performing pruning at a basic unit of a convolution kernel group may also be referred to as filter-level (filter-level) pruning. According to the pruning policy, the entire convolution kernel group may be removed, and one convolution kernel group may include one or more convolution kernels.
⑤ Performing pruning at a basic unit of a network layer or an AI/ML operator may also be referred to as layer-level (layer-level) pruning. Based on the solution, the entire network layer or AI/ML operator may be removed. The pruning policy is a pruning policy at a large granularity, and this is equivalent to reconstructing a structure of the AI/ML model.

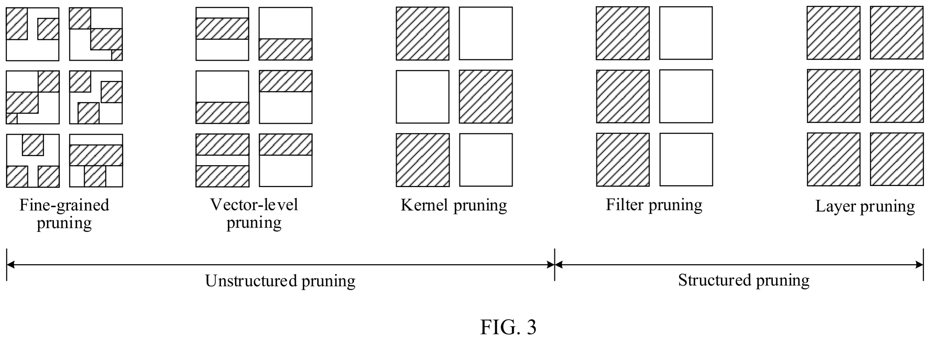

For example, FIG. 3 is an example of the foregoing five pruning policies. Slashes in FIG. 3 indicate a pruned-off part.

In the foregoing five pruning policies, the fine-grained pruning is the most irregular. Generally, if the fine-grained pruning is performed on the first AI/ML model, a requirement for a software and hardware running environment of the third device is high, but a possibility of a performance loss caused by pruning is smaller. Based on sorting of the fine-grained pruning-the vector pruning-the kernel pruning-the filter pruning-the layer pruning, a pruning process is increasingly regular, and the requirement for the software and hardware running environment of the third device is gradually lowered, but the possibility of the performance loss caused by pruning gradually increases.

In the policy of fusing at least two operators, the plurality of "small" operators may be replaced by using the single "large" operator while the same function as that of the plurality of "small" operators or the function with slightly poor precision is completed by using the "large" operator.

In the policy of fusing at least two network layers, at least one network layer may be reduced by fusing operators between the at least two network layers. This may be understood as fusion of the at least two network layers.

In addition to supporting the foregoing several adjustment policies, the third device may further support another adjustment policy. For example, for a transformer (transformer)-based AI/ML model, there may be pruning policies different from the foregoing pruning policies, and the third device may also support these pruning policies. Alternatively, in addition to the pruning policy, the fusion policy, or the quantization policy, the third device may further support another policy for adjusting the AI/ML model. The capability information may also indicate the policy. A specific adjustment policy is not limited in this embodiment of this application.

The capability information includes a specific adjustment policy, for example, includes a name of the adjustment policy, an index of the adjustment policy, or a level to which the adjustment policy belongs. The first device may determine the adjustment policy based on the name of the adjustment policy, the index of the adjustment policy, or the level to which the adjustment policy belongs. In this way, the adjustment request information does not need to include specific content of the adjustment policy, and overheads of the capability information can be reduced.

Execution efficiency of the third device for a specific adjustment policy may be understood as efficiency of running a second adjustment range by the third device after the second adjustment range is adjusted according to the adjustment policy. Execution duration of the third device for a specific adjustment policy may be understood as duration of running a second adjustment range by the third device after the second adjustment range is adjusted according to the adjustment policy. An execution speed of the third device for a specific adjustment policy may be understood as a speed of running a second adjustment range by the third device after the second adjustment range is adjusted according to the adjustment policy. Execution energy efficiency of the third device for a specific adjustment policy may be understood as energy efficiency of running a second adjustment range by the third device after the second adjustment range is adjusted according to the adjustment policy. The capability information may include one or more of the execution efficiency, the execution duration, the execution speed, or the execution energy efficiency of the third device for the at least one adjustment policy, to help the second device select an adjustment policy to adjust the first AI/ML model. For example, the second device may select an adjustment policy for which the third device has high execution efficiency. The second adjustment range may include one or more of the following: an AI/ML model, a network layer, an AI/ML operator, an AI/ML substructure, a convolution kernel group, a convolution kernel, a connection, or a neuron. The second adjustment range and the foregoing first adjustment range may be a same adjustment range, or may be different adjustment ranges. Optionally, a unit of the execution efficiency is, for example, floating-point operations per second (floating-point operations per second, FLOPS) or FLOPS/watt (W). Optionally, the execution efficiency of the third device for the specific adjustment policy may be a value of the execution efficiency, an index of the execution efficiency, or a level to which the efficiency belongs. The second device may determine the execution efficiency based on the value of the execution efficiency, the index of the execution efficiency, or the level to which the execution efficiency belongs. In this way, the adjustment request information does not need to include specific content of the execution efficiency, and the overheads of the adjustment request information can be reduced. An implementation of a parameter such as the execution speed, the execution duration, or the execution energy efficiency that is of the third device for the specific adjustment policy and that is included in the capability information is similar to an implementation of the execution efficiency included in the capability information. Details are not described again.

The optimal amount of parallel computing (or parallel computing units) supported by the third device is, for example, N. In this case, the second device may consider the amount when adjusting the second adjustment range, so that a computation amount can be made exactly N in each round of running as much as possible when the third device runs an adjusted second adjustment range. This is equivalent to that a parallel computation amount of the third device can be optimal in each round of running, to implement higher computing efficiency. For example, the third device needs to run the adjusted second adjustment range for k rounds. In this case, the computation amount is k×N, where both k and N are positive integers.

The capability information may include one or more of the efficiency, the duration, the speed, or the energy efficiency of running the at least one object by the third device. For example, the at least one object includes one or more of the following: an AI/ML model, a network layer, an AI/ML operator, an AI/ML substructure, a convolution kernel group, a convolution kernel, a connection, or a neuron. Optionally, if the at least one object includes an AI/ML model, the AI/ML model may include the first AI/ML model. The second device is notified of one or more of the efficiency, the duration, the speed, or the energy efficiency of running the at least one object by the third device, so that the second device can learn, based on the information and information about the first AI/ML model, performance of running each object in the first AI/ML model by the third device, such as duration and energy consumption, and adjust the first AI/ML model based on the performance. For example, the second device may optimize, in the adjustment process, an object that is in the first AI/ML model and that has low running efficiency on the third device, to improve performance of running the first AI/ML model by the third device, for example, shorten running duration of the third device and/or reduce running energy consumption.

Optionally, efficiency that is of running a specific object by the third device and that is included in the adjustment request information may be a value of the efficiency, an index of the efficiency, or a level to which the efficiency belongs. The second device may determine the efficiency based on the value of the efficiency, the index of the efficiency, or the level to which the efficiency belongs. In this way, the adjustment request information does not need to include specific content of the efficiency, and the overheads of the adjustment request information can be reduced. An implementation of a parameter such as duration, a speed, or energy efficiency that is of running the specific object by the third device and that is included in the adjustment request information is similar to an implementation of the efficiency parameter. Details are not described again.

The capability information may include the information about the bottleneck existing when the third device runs the at least one object. For content included in the at least one object, refer to the foregoing descriptions. Optionally, the at least one object includes an object existing when one or more of efficiency, duration, a speed, or energy efficiency of running the first AI/ML model by the third device does not satisfy a threshold. It may be understood as that, the at least one object includes a running bottleneck of the third device. To be specific, when the third device runs a part or all of the at least one object, one or more of the following may be satisfied: long time consumption, low efficiency, a slow speed, or low energy efficiency. The capability information may indicate the running bottleneck of the third device, so that the second device may consider overcoming or weakening the running bottleneck of the third device as much as possible when adjusting the first AI/ML model.

Alternatively, the at least one object may not include a running bottleneck of the third device. To be specific, when the third device runs a part or all of the at least one object, one or more of the following may not be satisfied: long time consumption, low efficiency, a low speed, or low energy efficiency. In other words, although the third device has good performance when running the at least one object, the capability information may indicate the information about the bottleneck existing when the third device runs the at least one object. In this way, the second device can optimize running performance of the third device for the first AI/ML model as much as possible.

The efficiency of running the specific object by the third device may correspond to a first threshold. If the efficiency of running the specific object by the third device is greater than the first threshold, it indicates that the efficiency of running the object by the third device satisfies a threshold (the first threshold). If the efficiency of running the specific object by the third device is less than or equal to the first threshold, it indicates that the efficiency of running the object by the third device does not satisfy a threshold (the first threshold). Optionally, the efficiency of running the specific object by the third device is reflected by, for example, a relative proportion of the duration of running the object by the third device. The relative proportion of the duration of running the specific object by the third device may be a ratio of a ratio A to a ratio B, where the ratio A is a ratio of the duration of running the object by the third device to a computation amount of running the object by the third device, and the ratio B is a ratio of total duration of running the first AI/ML model by the third device to a computation amount of running the first AI/ML model by the third device.

The duration of running the specific object by the third device may correspond to a second threshold. If the duration of running the specific object by the third device is less than the second threshold, or an absolute proportion of the duration of running the specific object by the third device is less than the second threshold, it indicates that the duration of running the object by the third device satisfies a threshold (the second threshold). If the duration of running the specific object by the third device is greater than or equal to the second threshold, or an absolute proportion of the duration of running the specific object by the third device is greater than or equal to the second threshold, it indicates that the duration of running the object by the third device does not satisfy a threshold (the second threshold). The absolute proportion of the duration of running the specific object by the third device may be a proportion of the duration of running the object by the third device in the total duration of running the first AI/ML model by the third device.

The speed of running the specific object by the third device may correspond to a third threshold. If the speed of running the specific object by the third device is greater than the third threshold, it indicates that the speed of running the object by the third device satisfies a threshold (the third threshold). If the speed of running the specific object by the third device is less than or equal to the third threshold, it indicates that the speed of running the object by the third device does not satisfy a threshold (the third threshold).

The energy efficiency of running the specific object by the third device may correspond to a fourth threshold. If the energy efficiency of running the specific object by the third device is greater than the fourth threshold, it indicates that the energy efficiency of running the object by the third device satisfies a threshold (the fourth threshold). If the energy efficiency of running the specific object by the third device is less than or equal to the fourth threshold, it indicates that the energy efficiency of running the object by the third device does not satisfy a threshold (the fourth threshold). Optionally, a unit of the energy efficiency is, for example, FLOPS/watt (W).

As described above, the capability information may include the information about the bottleneck existing when the third device runs the at least one object, that is, the capability information may indicate a cause of generating a bottleneck. For example, the bottleneck information may indicate a computing power bottleneck and/or a memory access bottleneck, or the like. If a quantity of the at least one object is greater than 1, causes for the third device to generate the bottleneck for a plurality of objects may be the same or different. If the causes are the same, the bottleneck information only needs to indicate one bottleneck. For example, the bottleneck is the computing power bottleneck and/or the memory access bottleneck. If bottleneck causes for different objects are different, the bottleneck information may separately indicate bottlenecks of the third device for the objects.

Optionally, before S201, S202 may be further included: The first device and the second device determine (or align) the first AI/ML model. S202 may be understood as that the first device and the second device determine a to-be-adjusted AI/ML model. In S202, there may be one or more to-be-adjusted AI/ML models determined by the first device and the second device, and one of the one or more AI/ML models is the first AI/ML model.

An implementation of S202 is: The first device sends information about the one or more AI/ML models to the second device, where the first device and the third device are a same device. Alternatively, another implementation of S202 is: The second device sends information about the one or more AI/ML models to the first device, where the first device and the third device are a same device. Alternatively, still another implementation of S202 is: The first device separately sends information about the one or more AI/ML models to the second device and the third device, where the first device and the third device are different devices. The one or more AI/ML models are to-be-adjusted AI/ML models.

An AI/ML model is aligned between the devices. For example, an alignment manner is that a structure of the AI/ML model is aligned between the devices, or a structure and a weight of the AI/ML model are aligned between the devices. For example, the first device sends the information about the one or more AI/ML models to the second device. In this case, the first device may send structure information of the one or more AI/ML models to the second device, or send structure information and weight information of the one or more AI/ML models. Optionally, the structure of the AI/ML model may be pre-agreed on between the first device and the second device. In this way, when the structure information of the AI/ML model is sent, it may not be necessary to send a specific structure, but one or more of an identifier, a name, or an index of the structure may be sent. For example, the first device and the second device pre-agree on an AI/ML operator and a corresponding name, and a substructure of the AI/ML model and a corresponding name. The example in which the first device sends the information about the one or more AI/ML models to the second device is still used. In this case, structure information that is of the first AI/ML model and that is sent by the first device to the second device may include a name of the AI/ML operator in the first AI/ML model, and/or include a name of the substructure in the first AI/ML model.

In addition, if the first device and the second device further align the weight, weight information exchanged between the devices may be a weight corresponding to structure information that is exchanged between the devices. For example, the structure information that is of the first AI/ML model and that is sent by the first device to the second device includes the name of the AI/ML operator in the first AI/ML model. In this case, the weight information sent by the first device to the second device may include weight information of the AI/ML operator that corresponds to the name.

S203: The second device adjusts the first AI/ML model based on the first information.

For example, the adjustment request information indicates the fine-grained pruning and includes the identifier of the first network layer. In this case, the second device may perform the fine-grained pruning on the first network layer in the first AI/ML model.

For another example, the adjustment request information indicates the unstructured pruning, and the second device considers, with reference to the capability information of the third device (or with reference to other information), that performing the vector-level pruning on the first AI/ML model brings better performance. In this case, the second device may perform the vector-level pruning on the first AI/ML model.

How to adjust the first AI/ML model may be implemented by the second device. This is not limited in this embodiment of this application. For example, the second device may adjust a structure and/or a weight of the first AI/ML model.

S204: The second device sends second information. Correspondingly, the third device receives the second information from the second device. The second information is information about the adjusted first AI/ML model. The second device may obtain the second information after adjusting the first AI/ML model. In this case, the second device may send the second information.

Optionally, regardless of whether the first device and the third device are the same device or different devices, the second device may directly send the second information to the third device. Alternatively, if the first device and the third device are different devices, the second device may send the second information to the first device, and then the first device forwards third information to the third device. In FIG. 2, an example in which the second device directly sends the second information to the third device is used.

For example, the second information includes weight information of an adjusted object in the first AI/ML model or weight information of an unadjusted object in the first AI/ML model. For example, the "object" includes one or more of the first AI/ML model, a network layer, an AI operator, a convolution kernel group, a convolution kernel, a connection, or a neuron. Optionally, the second information may further include an identifier of the adjusted object in the first AI/ML model or an identifier of the unadjusted object in the first AI/ML model, for example, a name or an index of the object, so that the third device can determine the adjusted object.

When the second device adjusts the first AI/ML model, an adjustment manner for the weight is discarding. For example, the second device may discard weights of a part of objects that are included in the first AI/ML model. For example, the weights of the part of objects are set to "0" or "invalid", and the part of objects are adjusted objects. Remaining objects other than the part of objects in the first AI/ML model are unadjusted objects, and weights of the unadjusted objects are reserved. In this case, the second information may include weight information of the unadjusted object in the first AI/ML model. There may be a large quantity of unadjusted objects. To enable the third device to determine specific objects corresponding to weights that are included in the second information, the second information may further include a bitmap (bitmap), and bits included in the bitmap may be in one-to-one correspondence with the objects included in the first AI/ML model. For example, the second device adjusts weights of a part of objects (also referred to as elements) in a specific AI/ML operator in the first AI/ML model. In this case, the bits included in the bitmap may be in one-to-one correspondence with the elements included in the AI operator, and an unadjusted element or an adjusted element in the AI/ML operator may be indicated by the bitmap. The element in the AI/ML operator is, for example, a convolution kernel, a neuron, or a connection. For example, a bit (bit) with a value of "0" in the bitmap may indicate the unadjusted element, and a bit with a value of "1" may indicate the adjusted element. A correspondence between the bits included in the bitmap and the elements is known. In this way, the second device can determine adjusted elements in the AI/ML operator and unadjusted elements in the AI/ML operator, and may correspond weight information included in the second information to the unadjusted elements.

In the foregoing manner, a quantity of bits that are included in the bitmap is equal to a quantity of objects that are included in the first AI/ML model, resulting in high overheads. Therefore, the second information may not include the bitmap, but include index, name, or position information of the at least one object. In this manner, it may be considered that the second information includes a key-value (key-value) of the at least one object. The at least one object is an adjusted object or an unadjusted object in the first AI/ML model. For example, if there are a large quantity of adjusted objects in the first AI/ML model, the at least one object may be the adjusted object; or if there are a large quantity of unadjusted objects in the first AI/ML model, the at least one object may be the unadjusted object. The second device can determine the at least one object based on the index, name, or position information of the at least one object, and may correspond weight information included in the second information to the unadjusted object. In this way, the adjusted object in the first AI/ML model is indicated, and overheads of the second information can be reduced. For example, the second device adjusts a weight of at least one object (also referred to as an element) in a specific AI/ML operator in the first AI/ML model. In this case, the second information may include index, name, or position information of the at least one element. The second device can determine the at least one element based on the index, name, or position information of the at least one element, and may correspond weight information included in the second information to the unadjusted element.

For example, a quantity of elements included in the specific AI/ML operator in the first AI/ML model is, for example, 10000. The second device adjusts weights of 100 elements in the specific AI/ML operator in the first AI/ML model. If a bitmap indication manner is used, a quantity of consumed bits is 10000; and if a key-value indication manner is used, only index, name, or position information of the 100 elements need to be indicated, and a quantity of consumed bits may be less than 10000.

S205: The third device runs the adjusted first AI/ML model based on the second information. The third device receives the second information. In this case, the third device may run the adjusted first AI/ML model based on the second information.

For example, the first AI/ML model is adjusted, so that the third device can better satisfy a requirement for running of the adjusted first AI/ML model. The requirement may include one or more of the following: The third device completes running of the adjusted first AI/ML model in limited time, the third device completes running of the adjusted first AI/ML model in limited energy consumption, or the third device completes running of the adjusted first AI/ML model in shorter time or lower energy consumption.

Optionally, although the first AI/ML model has been adjusted, an adjustment result may still not be optimized enough, or may still not satisfy a requirement of the software and hardware environment of the third device, for example, not satisfy one or more requirements described in the foregoing paragraph. Therefore, the first AI/ML model may continue to be adjusted.

For example, the third device may determine first adjustment information based on a running result of the adjusted first AI/ML model, where the first adjustment information may be for adjusting the first AI/ML model. Content of the first adjustment information is the same as or different from content of the adjustment request information. However, the content of the first adjustment information may be similar to the content of the adjustment request information. Details are not described again. The third device may send the first adjustment information to the second device, and/or send capability information of the third device to the second device. Optionally, the capability information that is of the third device and that is sent in this case may be the same as the foregoing capability information, or the capability information in this case may further include capability information of the third device running the adjusted first AI/ML model. The third device may directly send the first adjustment information to the second device, or may send the first adjustment information to the second device via the first device. If the first adjustment information is sent to the second device via the first device, the first device may directly forward the first adjustment information to the second device, or the first device may collect first adjustment information from a plurality of third devices, and then send the first adjustment information to the second device after organizing and integrating the information.

After receiving the first adjustment information and/or the capability information of the third device, the second device may re-adjust the first AI/ML model based on the first adjustment information and/or the capability information of the third device, and may send the third information after adjustment, where the third information is information about a re-adjusted first AI/ML model. The second device may directly send the third information to the third device, or may send the second information to the third device via the first device. After receiving the third information, the second device may run the re-adjusted first AI/ML model based on the third information. If a running result of the re-adjusted first AI/ML model is still not ideal, the first AI/ML model may continue to be adjusted, until a specified maximum quantity of times of adjustment is reached, or until a running result of the first AI/ML model is good. For a process of each round of adjustment, refer to descriptions of steps such as S201 and S203 to S205. Details are not described again.

In this embodiment of this application, the first device may send the adjustment request information and/or the capability information of the third device to the second device, and the second device may adjust the first AI/ML model based on the information. This is equivalent to that when adjusting the first AI/ML model, the second device can consider an actual case of the device on which the first AI/ML model is deployed, so that the adjustment result can adapt to the software and hardware environment of the third device, to improve adaptation between the AI/ML model and the device on which the AI/ML model is deployed. In this way, running performance of the third device for the AI/ML model can be improved.

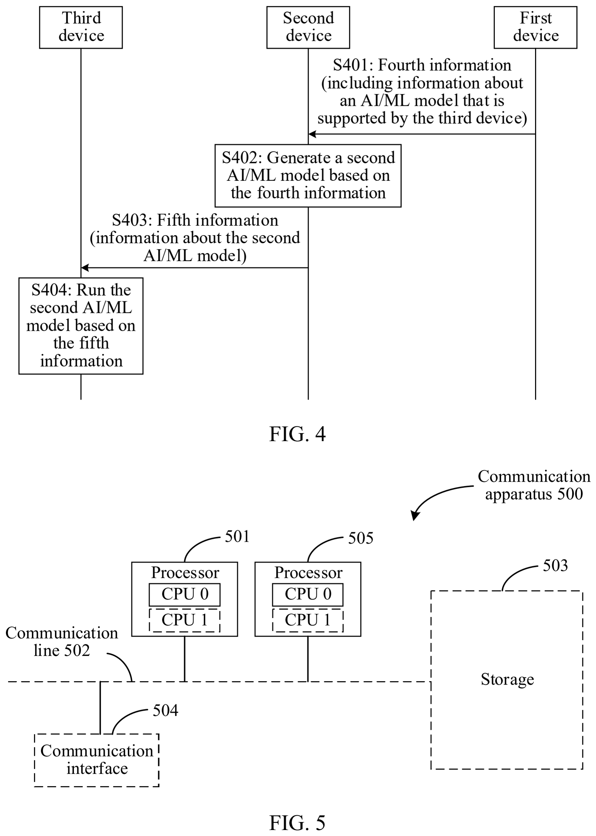

The embodiment shown in FIG. 2 relates to an adjustment process of the AI/ML model. In addition, when an AI/ML model is generated (or constructed) in embodiments of this application, reference may also be made to a case of a device on which the AI/ML model is to be deployed. The following describes a method for generating an AI/ML model according to an embodiment of this application, and describes the solution according to the method. FIG. 4 is a flowchart of the method.

S401: A first device sends fourth information to a second device. Correspondingly, the second device receives the fourth information from the first device. The fourth information may include information about an AI/ML model that is supported by a third device.

For example, the first device and the third device are a same device. In this case, the third device may send the fourth information to the second device. A device on which the AI/ML model is to be deployed directly sends the fourth information to the second device, so that the fourth information is more consistent with an actual software and hardware environment of the third device. In this way, performance of the third device in running the AI/ML model can be improved, such as a faster running speed or lower running energy consumption.

For another example, the first device and the third device are different devices. For example, the first device is a server configured to manage the third device, and the first device may store information about the third device, for example, store information about a first AI/ML model that is supported by the third device. In this case, the first device may send the information to the second device. The first device may manage one or more devices. In this case, the first device may send, to the second device at a time, information about AI/ML models that are supported by the one or more devices, so that the second device does not need to separately receive information from a plurality of devices. This helps simplify a receiving operation of the second device. In FIG. 4, an example in which the third device and the first device are different devices is used.

Optionally, the information about the AI/ML model that is supported by the third device may include one or more of the following: an identifier of a type of the third device; an identifier of a model of the third device; information about an AI/ML operator that is supported by the third device; information about an AI/ML submodule that is supported by the third device; information about an AI/ML model backbone (backbone) network that is supported by the third device; one or more of efficiency, duration, a speed, or energy efficiency of running the supported AI/ML operator by the third device; one or more of efficiency, duration, a speed, or energy efficiency of running the supported AI/ML submodule by the third device; one or more of efficiency, duration, a speed, or energy efficiency of running the supported AI/ML model backbone network by the third device; or information about a bottleneck existing when the third device runs the supported AI/ML operator, AI/ML submodule, or AI/ML model backbone network.

The information about the AI/ML model that is supported by the third device may include the identifier of the type of the third device or the identifier of the model of the third device. For example, a device of a same type or model as the third device may have a same capability as the third device, and can support a same AI/ML model.

The AI/ML operator supported by the third device includes, for example, one or more of a fully-connected network operator, a convolution computation operator, or an activation function operator, or may include another AI/ML operator. The information about the AI/ML operator that is supported by the third device may include a name or an index of the AI/ML operator, and/or include parameter (for example, hyper-parameter (hyper-parameter)) information of the AI/ML operator. For example, the third device supports the convolution computation operator. Information that is about the convolution computation operator and that is included in the fourth information may include a name of the convolution computation operator, and include one or more of parameters such as a size of a convolution kernel (for example, a 3×3 convolution kernel) that is included in the convolution computation operator, a quantity of convolution kernels, a step size of convolution computation, or whether to perform padding (padding).

One AI/ML submodule may include one or more AI/ML operators. For example, one AI/ML submodule may be formed by encapsulating one or more AI/ML operators. For example, the AI/ML submodule supported by the third device includes one or more of a residual block (residual block), an inverted residual block (inverted residual block), an inception (inception module) submodule, a shuffle network (ShuffleNet) submodule, or a multi-head attention (multi-head attention, MHA) submodule, or the third device may support another submodule. The information about the AI/ML submodule that is supported by the third device may include a name or an index of the AI/ML submodule, and/or include parameter (for example, hyper-parameter) information of the AI/ML submodule. A parameter of an AI/ML submodule includes, for example, one or more of parameters such as version information, a data input dimension, a data output dimension, or a quantity of channels of the AI/ML submodule.

The AI/ML model backbone network is, for example, a backbone, and is a common part of a neural network. The AI/ML model backbone network supported by the third device includes, for example, one or more of a residual network (ResNet), Inception (Google Network (GoogleNet)), a squeeze network (SqueezeNet), a mobile network (MobileNet), or a ShuffleNet. In addition, the third device may further support another AI/ML model backbone network. The information about the AI/ML model backbone network that is supported by the third device may include a name or an index of the AI/ML model backbone network, and/or include parameter (for example, hyper-parameter) information of the AI/ML model backbone network. A parameter of an AI/ML model backbone network includes, for example, one or more of parameters such as version information, a data input dimension, a data output dimension, or a quantity of network layers of the AI/ML model backbone network.

The efficiency that is of running the supported object by the third device and that is included in the fourth information may be actual efficiency of running the object by the third device, or may be a level of the efficiency of running the object by the third device, or may be sorting of the efficiency of running the object by the third device. For example, the third device supports at least one object. In this case, efficiency of running the at least one object by the third device may be sorted, and a sorting result is included in the fourth information as the efficiency of running the supported object by the third device. The speed that is of running the supported object by the third device and that is included in the fourth information may be an actual speed of running the object by the third device, or may be a level of the speed of running the object by the third device, or may be sorting of the speed of running the object by the third device. The duration that is of running the supported object by the third device and that is included in the fourth information may be actual duration of running the object by the third device, or may be a level of the duration of running the object by the third device, or may be sorting of the duration of running the object by the third device. Similarly, the energy efficiency that is of running the supported object by the third device and that is included in the fourth information may be actual energy efficiency of running the object by the third device, or may be a level of the energy efficiency of running the object by the third device, or may be sorting of the energy efficiency of running the object by the third device. The object supported by the third device includes, for example, one or more of an AI/ML operator, an AI/ML submodule, or an AI/ML model backbone network.

The information that is about the bottleneck existing when the third device runs the supported AI/ML operator, AI/ML submodule, or AI/ML model backbone network and that is included in the fourth information may indicate, for example, a computing power bottleneck and/or a memory bottleneck. The third device may have a same running bottleneck or different running bottlenecks for objects of different types. For example, running bottlenecks for both the AI/ML operator and the AI/ML submodule are computing power bottlenecks; or a running bottleneck for AI/ML operator is the computing power bottleneck, and a running bottleneck for the AI/ML submodule is the memory bottleneck. In addition, the third device may also have a same running bottleneck or different bottlenecks for objects of a same type. For example, for different AI/ML operators, running bottlenecks of the third device are all memory bottlenecks; or running bottlenecks for some AI/ML operators are the computing power bottleneck, and running bottlenecks for some other AL/ML operators are the memory bottleneck.

S402: The second device generates (or constructs or trains) a second AI/ML model based on the fourth information. That the second device generates the second AI/ML model may include determining a structure of the second AI/ML model, and optionally, further include generating a weight of an object in the second AI/ML model.

For example, the second device may select one or more of the following from the AI/ML operator, AI/ML submodule, or AI/ML model backbone network supported by the third device to construct the structure of the second AI/ML model: a part or all of AI/ML operators, a part or all of AI/ML submodules, or a part or all of AI/ML model backbone networks. Optionally, the second device may obtain a weight of the constructed second AI/ML model through training. Alternatively, the second device may select, from generated and trained AI/ML models, an AI/ML model that can satisfy the fourth information as the second AI/ML model.

Optionally, in a process of generating the second AI/ML model, or after generating the second AI/ML model, the second device may further pre-determine a running result of the second AI/ML model based on the fourth information. For example, the second device pre-determines the running result of the third device for the second AI/ML model based on information such as the efficiency, the speed, the duration, and the energy efficiency that are of running the supported object by the third device and that are indicated by the fourth information. After pre-determining the running result, the second device may re-adjust the second AI/ML model based on the predetermined running result, for example, adjust the structure and/or the weight of the second AI/ML model. In this way, a better second AI/ML model can be obtained, so that a finally determined second AI/ML model can be better supported by the third device, and better execution performance can be achieved.

S403: The second device sends fifth information to the third device. Correspondingly, the third device receives the fifth information from the second device. The fifth information includes information about the second AI/ML model.

Optionally, regardless of whether the first device and the third device are the same device or different devices, the second device may directly send the fifth information to the third device. Alternatively, if the first device and the third device are different devices, the second device may send the fifth information to the first device, and then the first device sends the fifth information to the third device. In FIG. 4, an example in which the second device directly sends the fifth information to the third device is used.

The information about the second AI/ML model may include structure information and/or weight information of the second AI/ML model. For example, the information about the second AI/ML model includes one or more of the following: a name or an index of the second AI/ML model, a name or an index of an AI/ML submodule in the second AI/ML model, and a name or an index of an AI/ML operator in the second AI/ML model, a name or an index of an AI/ML model backbone network in the second AI/ML model, weight information of the AI/ML submodule in the second AI/ML model, weight information of the AI/ML operator in the second AI/ML model, or weight information of the AI/ML model backbone network in the second AI/ML model. In addition, the information about the second AI/ML model may further include other information related to the second AI/ML model. This is not specifically limited.

S404: The third device runs the second AI/ML model based on the fifth information. The third device receives the information about the second AI/ML model. In this case, the third device may run the second AI/ML model based on the information.

Optionally, although the second device considers the actual software and hardware environment of the third device as much as possible when generating the second AI/ML model, the second AI/ML model may still not be an optimal model, or may still not satisfy a requirement of the software and hardware environment of the third device, for example, not satisfy one or more of the following: The third device completes running of the second AI/ML model in limited time, the third device completes running of the second AI/ML model in limited energy consumption, or the third device completes running of the second AI/ML model in shorter time or lower energy consumption. Therefore, the second AI/ML model may be adjusted.

For example, the third device may determine second adjustment information based on the running result of the second AI/ML model, where the second adjustment information may be for adjusting the second AI/ML model. The third device may send the second adjustment information to the second device directly or via the first device, and/or send capability information of the third device to the second device directly or via the first device. After receiving the second adjustment information and/or the capability information of the third device, the second device may adjust the second AI/ML model based on the information, and may send sixth information after adjustment is completed, where the sixth information includes information about an adjusted second AI/ML model. The second device may directly send the sixth information to the third device, or may forward the sixth information to the third device via the first device. After receiving the sixth information, the third device may run the adjusted second AI/ML model based on the sixth information. If a running result of the adjusted second AI/ML model is still not ideal, the second AI/ML model may continue to be adjusted, until a maximum quantity of times of adjustment is reached, or until a running result of the second AI/ML model is good. Details are not described.

Optionally, an adjustment manner requested in the second adjustment information may include adjustment of the structure of the second AI/ML model, and/or adjustment of a parameter of the second AI/ML model. For example, the second adjustment information may include (or indicate) one or more of the following: deleting an AI/ML operator in the second AI/ML model, deleting an AI/ML submodule in the second AI/ML model, deleting a network layer in the second AI/ML model, adding an AI/ML operator in the second AI/ML model, adding an AI/ML submodule in the second AI/ML model, adding a network layer in the second AI/ML model, adjusting a parameter of an AI/ML operator in the second AI/ML model, adjusting a parameter of an AI/ML submodule in the second AI/ML model, adjusting a parameter of a network layer in the second AI/ML model, pruning the second AI/ML model, fusing at least two operators included in the second AI/ML model, fusing at least two operator layers included in the second AI/ML model, or fusing at least two network layers included in the second AI/ML model. Optionally, if the second adjustment information includes deleting or adding the object in the second AI/ML model (where the object includes, for example, the AI/ML operator, the AI/ML submodule, or the network layer), the second adjustment information may further indicate a name, an index, or a position of a specific deleted or added object.

If the second adjustment information includes information such as pruning the second AI/ML model, fusing at least two operators included in the second AI/ML model, fusing at least two operator layers included in the second AI/ML model, or fusing at least two network layers included in the second AI/ML model, for descriptions of these related policies, reference may be made to the embodiment shown in FIG. 2.

The second device adjusts the second AI/ML model, so that the running result of the second AI/ML model is optimal. For example, when the third device runs the adjusted second AI/ML model (or an adjusted AI/ML operator, AI/ML submodule, or network layer), the efficiency can be higher, the duration can be shorter, the speed can be faster, and the energy efficiency can be higher. For another example, when the third device runs the adjusted second AI/ML model (or an adjusted AI/ML operator, AI/ML submodule, or network layer), an original bottleneck can be overcome or weakened. For example, the adjusted second AI/ML model may satisfy one or more of the following: The third device completes running of the adjusted second AI/ML model in limited time, the third device completes running of the adjusted second AI/ML model in limited energy consumption, the third device completes running of the adjusted second AI/ML model in shorter time or lower energy consumption, or the third device has better running performance for the adjusted second AI/ML model.

In this embodiment of this application, the first device may send, to the second device, the information about the AI/ML model that is supported by the third device, and the second device may generate the AI/ML model based on the information. This is equivalent to a case in which when generating the AI/ML model, the second device can consider an actual case of the device on which the AI/ML model is deployed, so that the generated AI/ML model can adapt to the software and hardware environment of the third device, to improve adaptation between the AI/ML model and the device on which the AI/ML model is deployed. In this way, running performance of the AI/ML model can be improved.

FIG. 5 is a diagram of a structure of a communication apparatus according to an embodiment of this application. The communication apparatus 500 may be the first device in the embodiment shown in FIG. 2 or FIG. 4 or a circuit system of the first device, and is configured to implement a method corresponding to the first device in the foregoing method embodiments. Alternatively, the communication apparatus 500 may be the second device in the embodiment shown in FIG. 2 or FIG. 4 or a circuit system of the second device, and is configured to implement a method corresponding to the second device in the foregoing method embodiments. Alternatively, the communication apparatus 500 may be the third device in the embodiment shown in FIG. 2 or FIG. 4 or a circuit system of the third device, and is configured to implement a method corresponding to the third device in the foregoing method embodiments. For example, a circuit system is a chip system.

The communication apparatus 500 includes at least one processor 501. The processor 501 may be configured to perform internal processing of the apparatus, to implement a specific control processing function. Optionally, the processor 501 includes instructions. Optionally, the processor 501 may store data. Optionally, different processors may be independent components, may be located at different physical positions, or may be located on different integrated circuits. Optionally, different processors may be integrated into one or more processors, for example, integrated into one or more integrated circuits.

Optionally, the communication apparatus 500 includes one or more storages 503 configured to store instructions. Optionally, the storage 503 may further store data. The processor and the storage may be separately arranged, or may be integrated together.

Optionally, the communication apparatus 500 includes a communication line 502 and at least one communication interface 504. Because the storage 503, the communication line 502, and the communication interface 504 are all optional items, the storage 503, the communication line 502, and the communication interface 504 are all indicated by dashed lines in FIG. 5.

Optionally, the communication apparatus 500 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement receiving and sending functions of the communication apparatus 500 through the antenna. Optionally, the transceiver includes a transmitter (transmitter) and a receiver (receiver). For example, the transmitter may be configured to generate a radio frequency (radio frequency) signal from a baseband signal, and the receiver may be configured to convert the radio frequency signal into the baseband signal.

The processor 501 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 502 may include a path for information transfer between the foregoing components.

The communication interface 504 uses any apparatus like a transceiver, and is configured to communicate with another device or a communication network, such as the Ethernet, a radio access network (radio access network, RAN), a wireless local area network (wireless local area network, WLAN), or a wired access network.

The storage 503 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer. However, this is not limited thereto. The storage 503 may exist independently, and is connected to the processor 501 through the communication line 502. Alternatively, the storage 503 may be integrated with the processor 501.

The storage 503 is configured to store computer-executable instructions for performing the solutions of this application, and the processor 501 controls execution. The processor 501 is configured to execute the computer-executable instructions stored in the storage 503, to implement steps performed by the first device, the second device, or the third device in the embodiment shown in FIG. 2 or FIG. 4.

Optionally, the computer-executable instructions in this embodiment of this application may also be referred to as application program code. This is not specifically limited in this embodiment of this application.

During specific implementation, in an embodiment, the processor 501 may include one or more CPUs, such as a CPU 0 and a CPU 1 in FIG. 5.

During specific implementation, in an embodiment, the communication apparatus 500 may include a plurality of processors, such as the processor 501 and a processor 505 in FIG. 5. Each of the processors may be a single-core (single-CPU) processor, or may be a multi-core (multi-CPU) processor. The processor herein may be one or more devices, circuits, and/or processing cores configured to process data (for example, computer program instructions).

When the apparatus shown in FIG. 5 is a chip, for example, is a chip in the first device, a chip in the second device, or a chip in the third device, the chip includes the processor 501 (which may further include the processor 505), the communication line 502, and the communication interface 504. Optionally, the chip may include the storage 503. Specifically, the communication interface 504 may be an input interface, a pin, a circuit, or the like. The storage 503 may be a register, a cache, or the like. The processor 501 and the processor 505 each may be a general-purpose CPU, a microprocessor, an ASIC, or one or more integrated circuits configured to control program execution of the method in any one of the foregoing embodiments.

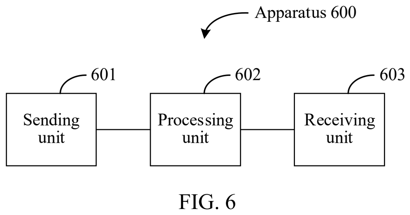

In embodiments of this application, the apparatus may be divided into functional modules based on the foregoing method examples. For example, the functional modules may be obtained through division based on corresponding functions, or two or more functions may be integrated into one processing module. The integrated module may be implemented in a form of hardware, or may be implemented in a form of a software functional module. It should be noted that, in embodiments of this application, division of the modules is an example, and is merely a logical function division. In an actual implementation, there may be another division manner. For example, when the functional modules are obtained through division based on the corresponding functions, FIG. 6 is a diagram of an apparatus. The apparatus 600 may be the first device, the second device, or the third device in the foregoing method embodiments, or a chip in the first device, a chip in the second device, or a chip in the third device. The apparatus 600 includes a sending unit 601, a processing unit 602, and a receiving unit 603.

It should be understood that, the apparatus 600 may be configured to implement steps performed by the first device, the second device, or the third device in the method in embodiments of this application. For related features, refer to the embodiment shown in FIG. 2 or FIG. 4. Details are not described herein again.

Optionally, functions/implementation processes of the sending unit 601, the receiving unit 603, and the processing unit 602 in FIG. 6 may be implemented by the processor 501 in FIG. 5 by invoking the computer-executable instructions stored in the storage 503. Alternatively, functions/implementation processes of the processing unit 602 in FIG. 6 may be implemented by the processor 501 in FIG. 5 by invoking the computer-executable instructions stored in the storage 503, and functions/implementation processes of the sending unit 601 and the receiving unit 603 in FIG. 6 may be implemented by the communication interface 504 in FIG. 5.

Optionally, when the apparatus 600 is a chip or a circuit, the functions/implementation processes of the sending unit 601 and the receiving unit 603 may alternatively be implemented by a pin, a circuit, or the like.

This application further provides a computer-readable storage medium. The computer-readable storage medium stores a computer program or instructions. When the computer program or the instructions are run, the method performed by the first device, the second device, or the third device in the foregoing method embodiments is implemented. In this way, the functions in the foregoing embodiments may be implemented in a form of a software functional unit and sold or used as an independent product. Based on such an understanding, the technical solutions of this application essentially, or the part contributing to a conventional technology, or a part of the technical solutions may be embodied in a form of a software product. The computer software product is stored in a storage medium, and includes several instructions for instructing a computer device (which may be a personal computer, a server, a network device, or the like) to perform all or a part of steps of the methods in embodiments of this application. The storage medium includes any medium that can store program code, such as a USB flash drive, a removable hard disk, a ROM, a RAM, a magnetic disk, or an optical disc.

This application further provides a computer program product. The computer program product includes computer program code. When the computer program code is run on a computer, the computer is enabled to perform the method performed by the first device, the second device, or the third device in any one of the foregoing method embodiments.

An embodiment of this application further provides a processing apparatus, including a processor and an interface. The processor is configured to perform the method performed by the first device, the second device, or the third device in any one of the foregoing method embodiments.

All or a part of the foregoing embodiments may be implemented by using software, hardware, firmware, or any combination thereof. When software is used for implementing embodiments, all or a part of embodiments may be implemented in a form of a computer program product. The computer program product includes one or more computer instructions. When the computer program instructions are loaded and executed on a computer, all or a part of procedures or functions according to embodiments of this application are generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a server, or a data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Various illustrative logic units and circuits described in embodiments of this application may implement or operate the described functions by using a general-purpose processor, a digital signal processor (digital signal processor, DSP), an ASIC, a field-programmable gate array (field-programmable gate array, FPGA) or another programmable logic apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may also be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by a processor, or a combination thereof. The software unit may be stored in a RAM, a flash memory, a ROM, an erasable programmable read-only memory (erasable programmable read-only memory, EPROM), an EEPROM, a register, a hard disk, a removable magnetic disk, a CD-ROM, or any other form of storage medium in the art. For example, the storage medium may be connected to a processor, so that the processor may read information from the storage medium and write information to the storage medium. Optionally, the storage medium may alternatively be integrated into a processor. The processor and the storage medium may be arranged in an ASIC, and the ASIC may be arranged in a terminal device. Optionally, the processor and the storage medium may alternatively be arranged in different components of a terminal device.

The computer program instructions may alternatively be loaded onto a computer or another programmable data processing device, so that a series of operations and steps are performed on the computer or the another programmable device to generate computer-implemented processing, so that instructions executed on the computer or the another programmable device provide steps for implementing a function specified in one or more procedures in the flowcharts and/or in one or more blocks in the block diagrams.

Mutual reference may be made to content in embodiments of this application. Unless otherwise specified or there is a logical conflict, terms and/or descriptions in different embodiments are consistent and may be mutually referenced. Technical features in different embodiments may be combined based on an internal logical relationship thereof, to form a new embodiment.

It may be understood that, in embodiments of this application, the first device, and/or the second device, and/or the third device may perform a part or all of steps in embodiments of this application. The steps or operations are merely examples. In embodiments of this application, other operations or variations of various operations may be further performed. In addition, the steps may be performed in a sequence different from a sequence presented in embodiments of this application, and it is possible that not all operations in embodiments of this application are performed.

## Claims

1. A method for adjusting an artificial intelligence AI/a machine learning ML model, applied to a first communication system, wherein the first communication system comprises a first device, a second device, and a third device, and the method comprises:
sending, by the first device, first information to the second device;
receiving, by the second device, the first information, wherein the first information comprises information for requesting to adjust a first AI/ML model, and/or the first information comprises capability information of the third device;
adjusting, by the second device, the first AI/ML model based on the first information;
sending, by the second device, second information, wherein the second information is information about an adjusted first AI/ML model;
receiving, by the third device, the second information; and
running, by the third device, the adjusted first AI/ML model based on the second information.

2. The method according to claim 1, wherein the first device and the third device are a same device, and the first device is a terminal device.

3. The method according to claim 1, wherein the first device and the third device are different devices, the first device is a server or a first terminal device, the third device is a second terminal device, and the first terminal device is different from the second terminal device.

4. The method according to claim 3, wherein sending, by the second device, the second information comprises:
forwarding, by the second device, the second information to the third device via the first device; or
sending, by the second device, the second information to the third device.

5. The method according to any one of claims 1 to 4, wherein after running, by the third device, the adjusted first AI/ML model based on the second information, the method further comprises:
determining, by the third device, first adjustment information based on a running result of the adjusted first AI/ML model;
sending, by the third device, the first adjustment information to the second device;
receiving, by the second device, the first adjustment information;
re-adjusting, by the second device, the first AI/ML model based on the first adjustment information;
sending, by the second device, third information, wherein the third information is information about a re-adjusted first AI/ML model;
receiving, by the third device, the third information; and
running, by the third device, the re-adjusted first AI/ML model based on the third information.

6. The method according to any one of claims 1 to 5, wherein the first information further comprises first indication information, and the first indication information indicates whether to adjust the first AI/ML model.

7. The method according to any one of claims 1 to 6, wherein the information for requesting to adjust the first AI/ML model comprises one or more of the following:
an identifier of a first adjustment range, wherein the first adjustment range comprises one or more of the following: the first AI/ML model, a first network layer, a first AI/ML operator, a first AI/ML substructure, a first convolution kernel group, a first convolution kernel, a first connection, or a first neuron;
an identifier of a first adjustment policy;
an identifier of an object requested to be adjusted; or
a quantity or a proportion of objects requested to be adjusted.

8. The method according to any one of claims 1 to 7, wherein the capability information of the third device comprises one or more of the following:
an identifier of a type of the third device;
at least one adjustment policy supported by the third device;
execution efficiency of the third device for the at least one adjustment policy;
an optimal amount of parallel computing that is supported by the third device;
efficiency of running at least one object by the third device, wherein the at least one object comprises one or more of the following: an AI/ML model, a network layer, an AI/ML operator, an AI/ML substructure, a convolution kernel group, a convolution kernel, a connection, or a neuron; or
information about a bottleneck existing when the third device runs at least one object, wherein the at least one object comprises one or more of the following: an AI/ML model, a network layer, an AI/ML operator, an AI/ML substructure, a convolution kernel group, a convolution kernel, a connection, or a neuron.

9. The method according to claim 8, wherein the at least one adjustment policy comprises one or more of the following:
structured pruning;
unstructured pruning;
fusing at least two operators;
fusing at least two network layers; or
quantization.

10. The method according to claim 9, wherein the unstructured pruning comprises one or more of the following:
performing pruning at a basic unit of a connection or a neuron;
performing pruning at a basic unit of a connection vector or a neuron vector; or
performing pruning at a basic unit of a convolution kernel.

11. The method according to claim 9, wherein the structured pruning comprises one or more of the following:
performing pruning at a basic unit of a convolution kernel group; or
performing pruning at a basic unit of a network layer or an AI/ML operator.

12. The method according to any one of claims 8 to 11, wherein the bottleneck information indicates a computing power bottleneck and/or a memory access bottleneck.

13. The method according to any one of claims 1 to 12, wherein the second information comprises weight information corresponding to an AI/ML operator that is comprised in the adjusted first AI/ML model.

14. A method for adjusting an AI/ML model, applied to a first device or a chip in the first device, wherein the method comprises:
sending first information to a second device, wherein the first information comprises information for requesting to adjust a first AI/ML model, and/or the first information comprises capability information of a third device, and
the second device is configured to adjust the first AI/ML model, and the third device is configured to run the first AI/ML model.

15. The method according to claim 14, wherein the first device and the third device are different devices, the first device is a server or a first terminal device, the third device is a second terminal device, and the first terminal device is different from the second terminal device.

16. The method according to claim 14, wherein the first device and the third device are a same device, and the first device is a terminal device.

17. The method according to claim 16, wherein the method further comprises:
receiving second information from the second device, wherein the second information is information about an adjusted first AI/ML model; and
running the adjusted first AI/ML model based on the second information.

18. The method according to claim 17, wherein after running the adjusted first AI/ML model based on the second information, the method further comprises:
determining first adjustment information based on a running result of the adjusted first AI/ML model, wherein the first adjustment information is for re-adjusting the first AI/ML model;
sending the first adjustment information to the second device;
receiving third information from the second device, wherein the third information is information about a re-adjusted first AI/ML model; and
running the re-adjusted first AI/ML model based on the third information.

19. The method according to any one of claims 14 to 18, wherein the first information further comprises first indication information, and the first indication information indicates whether to adjust the first AI/ML model.

20. The method according to any one of claims 14 to 19, wherein the information for requesting to adjust the first AI/ML model comprises one or more of the following:
an identifier of a first adjustment range, wherein the first adjustment range comprises one or more of the following: the first AI/ML model, a first network layer, a first AI/ML operator, a first AI/ML substructure, a first convolution kernel group, a first convolution kernel, a first connection, or a first neuron;
an identifier of a first adjustment policy;
an identifier of an object requested to be adjusted; or
a quantity or a proportion of objects requested to be adjusted.

21. The method according to any one of claims 14 to 20, wherein the capability information of the third device comprises one or more of the following:
an identifier of a type of the third device;
at least one adjustment policy supported by the third device;
execution efficiency of the third device for the at least one adjustment policy;
an optimal amount of parallel computing that is supported by the third device;
efficiency of running at least one object by the third device, wherein the at least one object comprises one or more of the following: an AI/ML model, a network layer, an AI/ML operator, an AI/ML substructure, a convolution kernel group, a convolution kernel, a connection, or a neuron; or
information about a bottleneck existing when the third device runs at least one object, wherein the at least one object comprises one or more of the following: an AI/ML model, a network layer, an AI/ML operator, an AI/ML substructure, a convolution kernel group, a convolution kernel, a connection, or a neuron.

22. The method according to claim 21, wherein the at least one adjustment policy comprises one or more of the following:
structured pruning;
unstructured pruning;
fusing at least two operators;
fusing at least two network layers; or
quantization.

23. The method according to claim 22, wherein the unstructured pruning comprises one or more of the following:
performing pruning at a basic unit of a connection or a neuron;
performing pruning at a basic unit of a connection vector or a neuron vector; or
performing pruning at a basic unit of a convolution kernel.

24. The method according to claim 22, wherein the structured pruning comprises one or more of the following:
performing pruning at a basic unit of a convolution kernel group; or
performing pruning at a basic unit of a network layer or an AI/ML operator.

25. The method according to any one of claims 21 to 24, wherein the bottleneck information indicates a computing power bottleneck and/or a memory access bottleneck.

26. The method according to any one of claims 14 to 25, wherein the second information comprises weight information corresponding to an AI/ML operator that is comprised in the adjusted first AI/ML model.

27. A method for adjusting an AI/ML model, applied to a second device or a chip in the second device, wherein the method comprises:
receiving first information from a first device, wherein the first information comprises information for requesting to adjust a first AI/ML model, and/or the first information comprises capability information of a third device, and the third device is configured to run the first AI/ML model;
adjusting the first AI/ML model based on the first information; and
sending second information, wherein the second information is information about an adjusted first AI/ML model.

28. The method according to claim 27, wherein the first device and the third device are a same device, and the first device is a terminal device.

29. The method according to claim 27, wherein the first device and the third device are different devices, the first device is a server or a first terminal device, the third device is a second terminal device, and the first terminal device is different from the second terminal device.

30. The method according to claim 29, wherein sending the second information comprises:
forwarding, by the second device, the second information to the third device via the first device; or
sending, by the second device, the second information to the third device.

31. The method according to any one of claims 27 to 30, wherein after sending the second information, the method further comprises:
receiving first adjustment information from the third device;
re-adjusting the first AI/ML model based on the first adjustment information; and
sending third information, wherein the third information is information about a re-adjusted first AI/ML model.

32. The method according to any one of claims 27 to 31, wherein the first information further comprises first indication information, and the first indication information indicates whether to adjust the first AI/ML model.

33. The method according to any one of claims 27 to 32, wherein the information for requesting to adjust the first AI/ML model comprises one or more of the following:
an identifier of a first adjustment range, wherein the first adjustment range comprises one or more of the following: the first AI/ML model, a first network layer, a first AI/ML operator, a first AI/ML substructure, a first convolution kernel group, a first convolution kernel, a first connection, or a first neuron;
an identifier of a first adjustment policy;
an identifier of an object requested to be adjusted; or
a quantity or a proportion of objects requested to be adjusted.

34. The method according to any one of claims 27 to 33, wherein the capability information of the third device comprises one or more of the following:
an identifier of a type of the third device;
at least one adjustment policy supported by the third device;
execution efficiency of the third device for the at least one adjustment policy;
an optimal amount of parallel computing that is supported by the third device;
efficiency of running at least one object by the third device, wherein the at least one object comprises one or more of the following: an AI/ML model, a network layer, an AI/ML operator, an AI/ML substructure, a convolution kernel group, a convolution kernel, a connection, or a neuron; or
information about a bottleneck existing when the third device runs at least one object, wherein the at least one object comprises one or more of the following: an AI/ML model, a network layer, an AI/ML operator, an AI/ML substructure, a convolution kernel group, a convolution kernel, a connection, or a neuron.

35. The method according to claim 34, wherein the at least one adjustment policy comprises one or more of the following:
structured pruning;
unstructured pruning;
fusing at least two operators;
fusing at least two network layers; or
quantization.

36. The method according to claim 35, wherein the unstructured pruning comprises one or more of the following:
performing pruning at a basic unit of a connection or a neuron;
performing pruning at a basic unit of a connection vector or a neuron vector; or
performing pruning at a basic unit of a convolution kernel.

37. The method according to claim 35, wherein the structured pruning comprises one or more of the following:
performing pruning at a basic unit of a convolution kernel group; or
performing pruning at a basic unit of a network layer or an AI/ML operator.

38. The method according to any one of claims 34 to 37, wherein the bottleneck information indicates a computing power bottleneck and/or a memory access bottleneck.

39. The method according to any one of claims 27 to 38, wherein the second information comprises weight information corresponding to an AI/ML operator that is comprised in the adjusted first AI/ML model.

40. A method for adjusting an AI/ML model, applied to a first communication system, wherein the first communication system comprises a first device, a second device, and a third device, and the method comprises:
sending, by the first device, fourth information to the second device, wherein the fourth information comprises information about an AI/ML model that is supported by the third device;
receiving, by the second device, the fourth information;
generating, by the second device, a second AI/ML model based on the fourth information;
sending, by the second device, fifth information, wherein the fifth information comprises information about the second AI/ML model;
receiving, by the third device, the fifth information; and
running, by the third device, the second AI/ML model based on the fifth information.

41. The method according to claim 40, wherein the information about the second AI/ML model comprises structure information and/or weight information of the second AI/ML model.

42. The method according to claim 40 or 41, wherein the first device and the third device are a same device, and the first device is a terminal device.

43. The method according to claim 40 or 41, wherein the first device and the third device are different devices, the first device is a server or a first terminal device, the third device is a second terminal device, and the first terminal device is different from the second terminal device.

44. The method according to claim 43, wherein sending, by the second device, the fifth information comprises:
forwarding, by the second device, the fifth information to the third device via the first device; or
sending, by the second device, the fifth information to the third device.

45. The method according to any one of claims 40 to 44, wherein after running, by the third device, the second AI/ML model based on the fifth information, the method further comprises:
determining, by the third device, second adjustment information based on a running result of the second AI/ML model;
sending, by the third device, the second adjustment information to the second device;
receiving, by the second device, the second adjustment information;
adjusting, by the second device, the second AI/ML model based on the second adjustment information;
sending, by the second device, sixth information, wherein the sixth information comprises information about an adjusted second AI/ML model;
receiving, by the third device, the sixth information; and
running, by the third device, the adjusted second AI/ML model based on the sixth information.

46. The method according to claim 45, wherein the second adjustment information comprises one or more of the following:
deleting an AI/ML operator, an AI/ML submodule, or a network layer in the second AI/ML model;
adding an AI/ML operator, an AI/ML submodule, or a network layer in the second AI/ML model;
adjusting a parameter of an AI/ML operator, an AI/ML submodule, or a network layer in the second AI/ML model;
pruning the second AI/ML model;
fusing at least two operators comprised in the second AI/ML model;
fusing at least two operator layers comprised in the second AI/ML model;
fusing at least two network layers comprised in the second AI/ML model; or
quantizing the second AI/ML model.

47. The method according to any one of claims 40 to 46, wherein the information about the AI/ML model that is supported by the third device comprises one or more of the following:
an identifier of a type of the third device;
information about an AI/ML operator that is supported by the third device;
information about an AI/ML submodule that is supported by the third device, wherein one AI/ML submodule comprises one or more AI/ML operators;
information about an AI/ML model backbone network that is supported by the third device;
one or more of efficiency, duration, a speed, or energy efficiency of running the supported AI/ML operator by the third device;
one or more of efficiency, duration, a speed, or energy efficiency of running the supported AI/ML submodule by the third device;
one or more of efficiency, duration, a speed, or energy efficiency of running the supported AI/ML model backbone network by the third device; or
information about a bottleneck existing when the third device runs the supported AI/ML operator, AI/ML submodule, or AI/ML model backbone network.

48. A method for adjusting an AI/ML model, applied to a first device or a chip in the first device, wherein the method comprises:
sending fourth information to a second device, wherein the fourth information comprises information about an AI/ML model that is supported by a third device, and the fourth information is for generating an AI/ML model.

49. The method according to claim 48, wherein the first device and the third device are different devices, the first device is a server or a first terminal device, the third device is a second terminal device, and the first terminal device is different from the second terminal device.

50. The method according to claim 48, wherein the first device and the third device are a same device, and the first device is a terminal device.

51. The method according to claim 50, wherein the method further comprises:
receiving fifth information from the second device, wherein the fifth information comprises information about a second AI/ML model; and
running the second AI/ML model based on the fifth information.

52. The method according to claim 51, wherein the information about the second AI/ML model comprises structure information and/or weight information of the second AI/ML model.

53. The method according to claim 50 or 51, wherein after running the second AI/ML model based on the fifth information, the method further comprises:
determining second adjustment information based on a running result of the second AI/ML model, wherein the second adjustment information is for adjusting the second AI/ML model;
sending the second adjustment information to the second device;
receiving sixth information from the second device, wherein the sixth information comprises information about an adjusted second AI/ML model; and
running the adjusted second AI/ML model based on the sixth information.

54. The method according to claim 53, wherein the second adjustment information comprises one or more of the following:
deleting an AI/ML operator, an AI/ML submodule, or a network layer in the second AI/ML model;
adding an AI/ML operator, an AI/ML submodule, or a network layer in the second AI/ML model;
adjusting a parameter of an AI/ML operator, an AI/ML submodule, or a network layer in the second AI/ML model;
pruning the second AI/ML model;
fusing at least two operators comprised in the second AI/ML model;
fusing at least two operator layers comprised in the second AI/ML model;
fusing at least two network layers comprised in the second AI/ML model; or
quantizing the second AI/ML model.

55. The method according to any one of claims 48 to 54, wherein the information about the AI/ML model that is supported by the third device comprises one or more of the following:
an identifier of a type of the third device;
information about an AI/ML operator that is supported by the third device;
information about an AI/ML submodule that is supported by the third device, wherein one AI/ML submodule comprises one or more AI/ML operators;
information about an AI/ML model backbone network that is supported by the third device;
one or more of efficiency, duration, a speed, or energy efficiency of running the supported AI/ML operator by the third device;
one or more of efficiency, duration, a speed, or energy efficiency of running the supported AI/ML submodule by the third device;
one or more of efficiency, duration, a speed, or energy efficiency of running the supported AI/ML model backbone network by the third device; or
information about a bottleneck existing when the third device runs the supported AI/ML operator, AI/ML submodule, or AI/ML model backbone network.

56. A method for adjusting an AI/ML model, applied to a second device or a chip in the second device, wherein the method comprises:
receiving fourth information from a first device, wherein the fourth information comprises information about an AI/ML model that is supported by a third device;
generating a second AI/ML model based on the fourth information; and
sending fifth information, wherein the fifth information comprises information about the second AI/ML model.

57. The method according to claim 56, wherein the information about the second AI/ML model comprises structure information and/or weight information of the second AI/ML model.

58. The method according to claim 56 or 57, wherein the first device and the third device are a same device, and the first device is a terminal device.

59. The method according to claim 56 or 57, wherein the first device and the third device are different devices, the first device is a server or a first terminal device, the third device is a second terminal device, and the first terminal device is different from the second terminal device.

60. The method according to claim 59, wherein sending the fifth information comprises:
forwarding the fifth information to the third device via the first device; or
sending the fifth information to the third device.

61. The method according to any one of claims 56 to 60, wherein after sending the fifth information, the method further comprises:
receiving second adjustment information from the third device;
adjusting the second AI/ML model based on the second adjustment information; and
sending sixth information, wherein the sixth information comprises information about an adjusted second AI/ML model.

62. The method according to claim 61, wherein the second adjustment information comprises one or more of the following:
deleting an AI/ML operator, an AI/ML submodule, or a network layer in the second AI/ML model;
adding an AI/ML operator, an AI/ML submodule, or a network layer in the second AI/ML model;
adjusting a parameter of an AI/ML operator, an AI/ML submodule, or a network layer in the second AI/ML model;
pruning the second AI/ML model;
fusing at least two operators comprised in the second AI/ML model;
fusing at least two network layers comprised in the second AI/ML model; or
quantizing the second AI/ML model.

63. The method according to any one of claims 56 to 62, wherein the information about the AI/ML model that is supported by the third device comprises one or more of the following:
an identifier of a type of the third device;
information about an AI/ML operator that is supported by the third device;
information about an AI/ML submodule that is supported by the third device, wherein one AI/ML submodule comprises one or more AI/ML operators;
information about an AI/ML model backbone network that is supported by the third device;
one or more of efficiency, duration, a speed, or energy efficiency of running the supported AI/ML operator by the third device;
one or more of efficiency, duration, a speed, or energy efficiency of running the supported AI/ML submodule by the third device;
one or more of efficiency, duration, a speed, or energy efficiency of running the supported AI/ML model backbone network by the third device; or
information about a bottleneck existing when the third device runs the supported AI/ML operator, AI/ML submodule, or AI/ML model backbone network.

64. A communication system, comprising a first device, a second device, and a third device, wherein
the first device is configured to send first information to the second device, wherein the first information comprises information for requesting to adjust a first AI/ML model and/or capability information of the third device;
the second device is configured to: receive the first information, adjust the first AI/ML model based on the first information, and send second information, wherein the second information is information about an adjusted first AI/ML model; and
the third device is configured to: receive the second information, and run the adjusted first AI/ML model based on the second information.

65. A communication apparatus, wherein the communication apparatus comprises a processing unit and a transceiver unit, and the processing unit is coupled to the transceiver unit, to perform the method according to any one of claims 14 to 26, or perform the method according to any one of claims 27 to 39, or perform the method according to any one of claims 40 to 47, or perform the method according to any one of claims 48 to 55, or perform the method according to any one of claims 56 to 63.

66. A communication apparatus, wherein the communication apparatus comprises a processor and a storage, the storage is configured to store a computer program, and the processor is configured to execute the computer program stored in the storage, to enable the communication apparatus to perform the method according to any one of claims 14 to 26, or enable the communication apparatus to perform the method according to any one of claims 27 to 39, or enable the communication apparatus to perform the method according to any one of claims 40 to 47, or enable the communication apparatus to perform the method according to any one of claims 48 to 55, or enable the communication apparatus to perform the method according to any one of claims 56 to 63.

67. A computer-readable storage medium, wherein the computer-readable storage medium is configured to store a computer program, and when the computer program runs on a computer, the computer is enabled to perform the method according to any one of claims 1 to 13, or the computer is enabled to perform the method according to any one of claims 14 to 26, or the computer is enabled to perform the method according to any one of claims 27 to 39, or the computer is enabled to perform the method according to any one of claims 40 to 47, or the computer is enabled to perform the method according to any one of claims 48 to 55, or the computer is enabled to perform the method according to any one of claims 56 to 63.

68. A computer program product, wherein the computer program product comprises a computer program, and when the computer program runs on a computer, the computer is enabled to perform the method according to any one of claims 1 to 13, or the computer is enabled to perform the method according to any one of claims 14 to 26, or the computer is enabled to perform the method according to any one of claims 27 to 39, or the computer is enabled to perform the method according to any one of claims 40 to 47, or the computer is enabled to perform the method according to any one of claims 48 to 55, or the computer is enabled to perform the method according to any one of claims 56 to 63.

69. A chip system, wherein the chip system comprises:
a processor and an interface, wherein the processor is configured to invoke instructions from the interface and run the instructions; and when the processor executes the instructions, the method according to any one of claims 1 to 13 is implemented, or the method according to any one of claims 14 to 26 is implemented, or the method according to any one of claims 27 to 39 is implemented, or the method according to any one of claims 40 to 47 is implemented, or the method according to any one of claims 48 to 55 is implemented, or the method according to any one of claims 56 to 63 is implemented.
